(19) Europäisches Patentamt
European Patent Office
Office européen des brevets

(11) EP 0 906 920 B1

(12) # FASCICULE DE BREVET EUROPEEN

(45) Date de publication et mention de la délivrance du brevet:
**14.05.2003 Bulletin 2003/20**

(51) Int Cl.⁷: **C08F 4/02**, C08F 4/60

(21) Numéro de dépôt: **98402400.0**

(22) Date de dépôt: **30.09.1998**

(54) **Support solide activateur des catalyseurs métallocènes en polymérisation des oléfines, son procédé de préparation, système catalytique et procédé de polymérisation correspondants**

Fester Aktivierungsträger für die Metallocenkatalysatoren in der Olefinpolymerisation, Herstellungsverfahren, Katalysatorsystem und entsprechendes Polymerisationsverfahren

Activator solid support for metallocene catalysts in the polymerisation of olefins, its corresponding preparation process, catalytical system and polymerisation process

(84) Etats contractants désignés:
**AT BE DE ES FI FR GB IT NL SE**

(30) Priorité: **02.10.1997 FR 9712270**

(43) Date de publication de la demande:
**07.04.1999 Bulletin 1999/14**

(73) Titulaire: **Atofina**
**92800 Puteaux (FR)**

(72) Inventeurs:
- **Saudemont, Thierry**
  **64270 Salies De Bearn (FR)**
- **Spitz, Roger**
  **69006 Lyon (FR)**
- **Broyer, Jean-Pierre**
  **69500 Bron (FR)**
- **Malinge, Jean**
  **64300 Loubieng (FR)**
- **Verdel, Nathalie**
  **81600 Gaillac (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(56) Documents cités:
**EP-A- 0 166 157** **US-A- 5 543 376**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 906 920 B1

## Description

La présente invention porte sur un support solide activateur des catalyseurs métallocènes utilisés pour la polymérisation des oléfines ; sur un procédé de préparation d'un tel support ; sur le système catalytique correspondant ; ainsi que sur la polymérisation des oléfines, en suspension ou en phase gazeuse, à l'aide d'un tel système catalytique.

Il est bien connu de (co)polymériser l'éthylène et des alpha-oléfines en présence d'un système catalyseur métallocène/aluminoxane. Le premier système catalytique très actif de ce type qui a été découvert est celui à base de zirconocène : $Cp_2ZrCl_2$/aluminoxane. Les systèmes catalyseurs métallocène/aluminoxane sont solubles dans le milieu de polymérisation. Le développement des recherches dans ce domaine a conduit à découvrir d'autres catalyseurs métallocènes, comme les métallocènes pontés, lesquels sont capables de conduire, dans le cas de la copolymérisation de l'éthylène avec les alpha-oléfines, à une meilleure homogénéité de répartition des comonomères dans les chaînes moléculaires.

Les aluminoxanes, en particulier le méthylaluminoxane qui est le plus couramment utilisé, présentent cependant les inconvénients d'être des produits onéreux et instables, responsables en partie de la mauvaise morphologie des polymères, ce qui provoque l'encrassement des réacteurs et rend le convoyage très compliqué.

La Société déposante a recherché à résoudre ce problème dans le but de proposer un système catalytique à base de métallocène, actif en polymérisation des oléfines, n'utilisant pas ou utilisant moins d'aluminoxane que par le passé.

Il est maintenant admis qu'un complexe métallocène a une nature cationique sous sa forme active. Ceci a été vérifié par plusieurs méthodes spectrométriques et par l'équivalence des propriétés de deux polymères produits l'un par le système métallocène/aluminoxane, et, l'autre, par des systèmes métallocène/sels cationiques stables. Le rôle de l'aluminoxane est supposé être l'alkylation du métallocène, l'activation de l'espèce méthylée par formation d'un complexe cationique, et la stabilisation de cette espèce active. De nombreux contre-anions non-coordinants ont été proposés pour remplacer l'aluminoxane dans son rôle d'activateur [J. EWEN, M. ELDER, R. JONES, L. HASPESLAGH, J. ATWOOD, S. BOTT, K. ROBINSON : Makromol. Chem. Macromol. Symp. 48/49, 253 (1991) ; M. BOCHMANN, S. LANCASTER : Organometallics 12, 633 (1993)].

La Société déposante a découvert que le contre-anion du complexe cationique actif pouvait être constitué par un support solide, avantageusement de structure définie et contrôlée comparable à celle des supports employés en catalyse Ziegler-Natta classique pour permettre le développement physique de la polymérisation, ledit support étant fonctionnalisé pour créer des sites acides qui activent le métallocène sans le complexer.

Le support solide selon l'invention, tel que défini ci-après, constitue un support activateur qui a permis d'atteindre des niveaux d'activité en polymérisation des oléfines au moins égaux, mais souvent supérieurs, à l'activité affichée par un système purement homogène.

La présente invention a donc d'abord pour objet un support solide activateur des métallocènes en tant que catalyseurs dans la polymérisation des oléfines, caractérisé par le fait qu'il consiste en un ensemble de particules de support de composant catalytique solide, formées d'au moins un oxyde minéral poreux, lesdites particules ayant été modifiées pour porter, en surface, des sites acides de Lewis, aluminiques et/ou magnésiens, de formule :

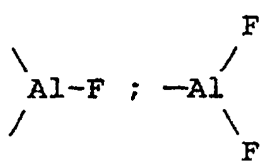
;

ou -Mg-F, les groupes

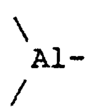

provenant d'un agent de fonctionnalisation ayant réagi sur des radicaux -OH portés par les particules de base du support, la réaction de fonctionnalisation ayant été suivie par une réaction de fluoration.

L'utilisation directe de fluorures d'aluminium et/ou de magnésium présente des difficultés peu surmontables en termes de réalisation d'un support ayant les propriétés granulométriques et poreuses adéquates.

Les oxydes minéraux poreux sont avantageusement choisis parmi la silice, l'alumine et leurs mélanges.

Les particules d'oxyde minéral poreux possèdent, de préférence, au moins l'une des caractéristiques suivantes :

- elles comportent des pores d'un diamètre allant de 7,5 à 30 nm (75 à 300 Å) ;
- elles présentent une porosité allant de 1 à 4 $cm^3/g$ ;
- elles présentent une surface spécifique allant de 100 à 600 $m^2/g$; et
- elles présentent un diamètre moyen allant de 1 à 100 µm.

Le support, avant sa modification, présente à sa surface des radicaux -OH, en particulier de 0,25 à 10, et, de manière encore davantage préférée, 0,5 à 4 radicaux -OH par $nm^2$. Après sa modification, ledit support présente autant de sites acides de Lewis aluminiques et/ou magnésiens au moins partiellement fluorés par $nm^2$.

Le support peut être de nature diverse. Suivant sa nature, son état d'hydratation et son aptitude à retenir l'eau, on peut être amené à lui faire subir des traitements de déshydratation plus ou moins intenses, suivant la teneur en radicaux -OH souhaitée en surface.

L'homme du métier peut aboutir par des tests de routine au traitement de déshydratation qu'il convient d'appliquer au support qu'il a choisi, suivant la teneur en radicaux -OH souhaitée en surface.

Par exemple, si le support est en silice, ce qui est conforme à un mode de réalisation préféré de l'invention, la silice peut être chauffée entre 100 et 1 000°C et, de préférence, entre 140 et 800°C, sous balayage d'un gaz inerte comme l'azote ou l'argon, à la pression atmosphérique ou sous vide, par exemple de pression absolue 1 x $10^{-2}$ millibars, pendant par exemple au moins 60 min. Pour ce traitement thermique, la silice peut être mélangée par exemple à du $NH_4Cl$ de façon à accélérer la déshydratation.

Si ce traitement thermique est compris entre 100 et 450°C, il est envisageable de le faire suivre d'un traitement de silanisation. Ce genre de traitement aboutit à greffer, en surface du support, une espèce dérivée du silicium pour rendre plus hydrophobe cette surface. Ce silane peut, par exemple, être un alcoxytrialkylsilane tel que le méthoxytriméthylsilane, un trialkylchlorosilane tel que le triméthylchlorosilane ou le triéthylchlorosilane.

Ce silane est généralement appliqué sur le support en réalisant une suspension de ce support dans une solution organique de silane. Ce silane pourra, par exemple, être en concentration comprise entre 0,1 et 10 moles par mole de radicaux OH sur le support. Le solvant de cette solution pourra être choisi parmi les hydrocarbures aliphatiques linéaires ou ramifiés comme l'hexane ou l'heptane, les hydrocarbures alicycliques éventuellement substitués comme le cyclohexane, les hydrocarbures aromatiques comme le toluène, le benzène ou le xylène. Le traitement du support par la solution du silane est généralement réalisé entre 50°C et 150°C, pendant 1 à 48 heures et sous agitation.

Après silanisation, le solvant est éliminé, par exemple par siphonnage ou filtration, le support étant alors lavé, de préférence abondamment, par exemple par 0,3 l de solvant par gramme de support.

Le taux surfacique du support en radicaux -OH peut être dosé selon des techniques connues telles que, par exemple, par réaction d'un organomagnésien comme $CH_3MgI$ sur le support, avec mesure de la quantité de méthane dégagé [Mc Daniel, J. Catal., 67, 71(1981)] ; par réaction du triéthylaluminium sur le support, avec mesure de la quantité d'éthane dégagée [Thèse de Véronique Gachard-Pasquet, Université Claude Bernard - LYON 1, France, 1985, pages 221-224].

Conformément à la présente invention, lesdits sites acide de Lewis aluminiques et/ou magnésiens au moins partiellement fluorés sont formés par la réaction de radicaux -OH portés par les particules de base de support avec au moins un agent de fonctionnalisation choisi parmi :

- les composés de la formule (I) :

$$Al(R^1)_3 \qquad (I)$$

  dans laquelle les $R^1$, identiques ou différents, représentent chacun un groupe alkyle en $C_1$-$C_{20}$ ;

- les composés de la formule (II):

$$Mg(R^2)_2 \qquad (II)$$

dans laquelle les $R^2$, identiques ou différents, représentent chacun un groupe alkyle en $C_1$-$C_{20}$ ; et

- les composés de la formule (III) :

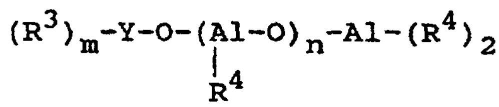

(III)

dans laquelle :

- les $R^3$, identiques ou différents représentent chacun un groupe alkyle en $C_1$-$C_{12}$ ou un groupe alcoxy en $C_1$-$C_{12}$ ;
- les $R^4$, identiques ou différents, représentent chacun un groupe alkyle en $C_1$-$C_{12}$ ou un groupe alcoxy en $C_1$-$C_{12}$ ;
- Y représente Al ou Si, m valant 2 si Y = Al et 3 si Y = Si ; et
- n vaut 0 ou est un entier de 1 à 40, de préférence n valant 0 ou étant un entier de 1 à 20 ;

- les composés de formule (IV) :

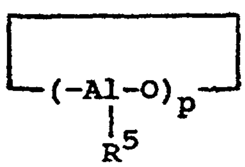

(IV)

dans laquelle :

- les $R^5$ représentent chacun un groupe alkyle en $C_1$-$C_8$ ; et
- p est un entier de 3 à 20,

ladite réaction de fonctionnalisation ayant été suivie par une réaction de fluoration.

A titre d'exemples de composés (I), on peut citer ceux dans lesquels les $R^1$ représentent méthyle, éthyle, butyle et hexyle, l'aluminium pouvant porter 1, 2 ou 3 groupements différents ; un composé (I) préféré est le triéthylaluminium.

A titre d'exemples de composés (II), on peut citer ceux dans lesquels $R^2$ représente méthyle, éthyle et butyle ; un composé (II) préféré est le n-butyl sec.-butyl magnésium.

A titre d'exemples de composés (III), on peut citer le dibutoxyaluminoxytriéthoxysilane $(C_2H_5O)_3$Si-O-Al-$(OC_4H_9)_2$, le tétraisobutyldialuminoxane $(iBu)_2$Al-O-Al$(iBu)_2$, et les alkyl aluminoxanes oligomères linéaires, en particulier ceux dans lesquels $R^3$ et $R^4$ sont des groupes méthyle.

Les composés (IV) sont des alkyl aluminoxanes oligomères cycliques ; on peut citer en particulier ceux dans lesquels $R^5$ est un groupe méthyle.

La présente invention porte également sur un support fonctionnalisé fluoré, tel qu'il vient d'être décrit, à l'état préimprégné par un catalyseur métallocène, ledit catalyseur métallocène ayant été le cas échéant soumis à un traitement de préalkylation conduit avant ou après la préimprégnation dudit support.

La présente invention porte également sur un procédé de préparation d'un support solide activateur des métallocènes en tant que catalyseurs dans la polymérisation des oléfines, caractérisé par le fait que l'on soumet à une fonctionnalisation un ensemble de particules de support de composant catalytique solide, formées d'au moins un oxyde minéral poreux et portant, en surface, des radicaux -OH, en utilisant un agent de fonctionnalisation capable de greffer sur lesdites particules des sites acides de Lewis, aluminiques et/ou magnésiens ; puis que l'on soumet lesdites particules de support ainsi greffées à un traitement de fluoration.

Pour la mise en oeuvre de ce procédé, on peut utiliser les particules de support telles qu'elles ont été décrites ci-dessus, et les agents de fonctionnalisation tels qu'ils ont été décrits ci-dessus.

Conformément à un mode de réalisation préféré de ce procédé, on conduit la fonctionnalisation en traitant une suspension desdites particules en milieu solvant par ledit agent de fonctionnalisation à une température de -150°C

à +150°C pendant un laps de temps de 1 minute à 12 heures, puis en récupérant les particules greffées après lavage. Le solvant est notamment choisi parmi les hydrocarbures aliphatiques, alicycliques et aromatiques, et des conditions davantage préférées de température et de durée sont de 30 à 100°C et de 1 à 3 heures. On utilise notamment 0,5 à 20 mmoles d'agent de fonctionnalisation par g de particules.

Après la fonctionnalisation, on peut éventuellement conduire un traitement thermique sous gaz inerte (tel que l'argon ou l'azote), de préférence en lit fluidisé par ledit gaz inerte, ledit traitement étant destiné à éliminer les groupes alcoxy présents en surface, lesquels pourraient provenir de l'agent de fonctionnalisation portant des radicaux alcoxy $R^3$ et/ou $R^4$. Ce traitement thermique, ou pyrolyse, est avantageusement conduit à environ 200 - 600°C pendant environ 1 - 10 heures. S'il n'était pas réalisé, les groupes alcoxy pourraient être à l'origine de formation d'eau par réaction avec l'oxygène lors d'un traitement d'oxydation qui peut être prévu avant la fluoration finale. On cherche en effet à éliminer toute trace d'eau, car l'eau est susceptible d'altérer ou d'empoisonner le solide.

Le traitement d'oxydation qui vient d'être indiqué peut avantageusement consister en un traitement thermique des particules de support fonctionnalisées, en lit fluidisé par l'oxygène, par exemple à 200 - 600°C, pendant 1 - 10 heures. Ce traitement permet d'accroître l'acidité de surface du support, et, en conséquence, les performances du système catalytique.

Les radicaux $R^1$, $R^2$, $R^3$, $R^4$ et $R^5$ sont au moins partiellement remplacés par F lors de l'étape finale de fluoration. La fluoration peut se faire par mise en contact avec de l'acide fluorhydrique gazeux des particules de support fonctionnalisées le cas échéant après traitement thermique sous gaz inerte et/ou après oxydation, cette mise en contact étant effectuée pendant un laps de temps d'1 minute à 24 heures, à une température de 20 à 800 °C ; cependant, l'acide fluorhydrique peut être avantageusement remplacé par $(NH_4)_2SiF_6$, auquel cas on mélange avec $(NH_4)_2SiF_6$ pulvérulent les particules de support fonctionnalisées, le cas échéant après traitement thermique sous gaz inerte et/ ou après oxydation ; le traitement de fluoration proprement dit avec $(NH_4)_2SiF_6$ consiste notamment à fluidiser légèrement le mélange précité des particules de support et de $(NH_4)_2SiF_6$ avec un gaz inerte tel que l'argon ou l'azote et à conduire un traitement thermique à une température d'environ 300 à 500°C pendant environ 1 à 10 heures. De manière générale, pour la fluoration, on utilisé notamment de 1 à 5% en poids, en particulier 3 à 5% en poids, de fluor par rapport auxdites particules de support (au-delà de la valeur de 5% en poids, il y a dégradation du support).

La présente invention porte également sur un système catalytique pour la polymérisation des oléfines, comprenant :

(a) un catalyseur métallocène, lequel a, le *cas* échéant, été soumis à une préalkylation ;
(b) un cocatalyseur ; et
(c) un support solide activateur du métallocène, tel que défini ci-dessus ou préparé par le procédé tel que défini ci-dessus,

le cocatalyseur (b) pouvant être absent si le catalyseur métallocène (a) a été préalablement alkylé, le support (c) pouvant avoir été imprégné par le catalyseur métallocène (a), lequel a, le cas échéant, été soumis à un traitement de préalkylation conduit soit avant, soit après la préimprégnation dudit support.

Le catalyseur métallocène (a) consiste de façon générale en un composé de formule (V) :

$$ML_x \qquad (V)$$

dans laquelle :

- M représente un métal de transition appartenant au groupe 4b de la Classification Périodique selon le Handbook of Chemistry and Physics, 61th edition ;
- L représente un ligand coordiné au métal de transition, au moins un ligand L étant un groupement au squelette de type cycloalcadiényle ;
- x est égal à la valence du métal de transition, les ligands L, dont le nombre est égal à la valence du métal de transition M, étant identiques ou différents.

M est en particulier Ti, Zr ou Hf.

Par "groupement au squelette de type cycloalcadiényle", on entend le groupe cycloalcadiényle lui-même ou un groupement cycloalcadiényle substitué.

De préférence, un groupement cycloalcadiényle est un groupement cyclopentadiényle.

- Lorsque le composé de formule $ML_x$ contient au moins deux groupements au squelette de type cycloalcadiényle,

au moins deux de *ces* groupements peuvent être liés entre eux par un radical bivalent. Chaque radical bivalent peut être un radical alkylène, comme le radical méthylène ($-CH_2-$), le radical éthylène ($-CH_2CH_2-$) ou triméthylène ($-CH_2CH_2CH_2-$), ce radical alkylène pouvant également être substitué, par exemple par au moins un groupement hydrocarboné, comme le radical isopropylidène ; le radical bivalent peut également être un groupement silylène ($-SiH_2$), éventuellement substitué, par exemple par au moins un groupement hydrocarboné, comme c'est le cas pour les radicaux dialkylsilylène (diméthylsilylène), diarylsilylène (diphénylsilylène) ou alkylarylsilylène (méthylphénylsilylène).

- Lorsqu'un groupement cycloalcadiényle est substitué, les substituants sont notamment choisis parmi les groupes alkyle en $C_1$-$C_{20}$, alcényle en $C_2$-$C_{20}$, aryle et aralkyle. Deux substituants se trouvant dans des positions adjacentes sur un même noyau cycloalcadiényle peuvent être reliés entre eux, formant un cycle aromatique ou non, condensé sur ledit noyau cycloalcadiényle. Dans le cas où ce dernier est un noyau cyclopentadiényle, le cycle condensé résultant peut être un cycle indényle, tétrahydroindényle, fluorényle, octahydrofluorényle.

Par ailleurs, au moins un ligand L peut être choisi parmi :

- les groupements de formule :

$$-O- ; -S- ; -NR^6- ; \text{ou } -PR^6$$

(avec $R^6$ représentant l'hydrogène ou un groupement choisi parmi les groupements silyle, alkyle ou aryle, ces deux derniers étant éventuellement halogénés) dont une des valences libres est liée à l'atome de métal de transition M, et l'autre valence libre est liée à un radical bivalent, lui-même lié à un ligand L au squelette cycloalcadiényle ; et

- les groupements de formule :

$$-OR^7 ; -SR^7 ; -NR^7_2 ; \text{ou } -PR^7_2$$

($R^7$ ayant la même signification que $R^6$ ci-dessus) dont la valence libre est liée à un radical bivalent, lui-même lié à un ligand L au squelette cycloalcadiényle ;

des exemples des radicaux bivalents ayant été indiqués ci-dessus, dans la description des agents pontants de deux ligands cycloalcadiényle.

Des ligands L différents de ceux précédemment cités peuvent être choisis parmi :

- les groupements hydrocarbonés comportant de 1 à 20 atomes de carbone, tels que des groupes alkyle linéaires ou ramifiés (comme méthyle, éthyle, propyle, isopropyle, butyle) ; des groupes cycloalkyle (comme cyclopentyle, cyclohexyle) ; des groupes aryle (comme phényle) ; des groupes alkaryle (comme tolyle) ; et des groupes aralkyle (comme benzyle) ;
- les groupements alcoxy, tels que méthoxy, éthoxy, butoxy et phénoxy ;
- les halogènes, tels que le fluor, le chlore, le brome et l'iode.

A titre d'exemples, le catalyseur métallocène peut être choisi parmi les composés suivants :

- le bis(cyclopentadiényl)dichlorozirconium ($Cp_2ZrCl_2$) ;
- le bis(indényl)dichlorozirconium ($Ind_2ZrCl_2$) ;
- le bis(n-butylcyclopentadiényl)dichloro zirconium [$(nBuCp)_2ZrCl_2$] ;
- l'éthylènebis (4,5,6,7-tétrahydro-1-indényl)dichlorozirconium [$Et(THInd)_2ZrCl_2$] ;
- l'éthylènebis (indényl)dichlorozirconium [$Et(Ind)_2ZrCl_2$] ;
- l'isopropylidène(cyclopentadiényl, fluorényl)dichlorozirconium [$iPr(Cp)(Flu)ZrCl_2$] ;
- l'isopropylidène bis(tert.-butylcyclopentadiényl)-dichlorozirconium [$iPr(tBuCp)_2ZrCl_2$] ;
- le diméthylsilyl(3-tert-butyl-cyclopentadiényl, fluorényl)dichlorozirconium ;
- le diméthylsilylbisindényldichlorozirconium [$Me_2Si(Ind)_2ZrCl_2$] ;
- le bis(cyclopentadiényl)diméthylzirconium
- le bis(indényl)diméthylzirconium ($Ind_2ZrMe_2$) ;
- l'éthylènebis (4,5,6,7-tétrahydro-1-indényl)diméthylzirconium ;

- l'éthylènebis(indényl)diméthylzirconium ;
- l'isopropylidène(cyclopentadiényl, fluorényl)diméthylzirconium ;
- le diméthylsilyl(3-tert.-butyl-cyclopentadiényl, fluorényl)diméthylzirconium ;
- le bis(cyclopentadiényl)diphénylzirconium ;
- le bis(cyclopentadiényl)dibenzylzirconium ;
- le diméthylsilyl(tétraméthylcyclopentadiényl, tert.-butyl-amino)dichlorozirconium, ce dernier composé ayant la formule $(CH_3)_2Si((CH_3)_4C_5,(CH_3)_3CN)ZrCl_2$ ;
- le diméthylsilyl(tétraméthylcyclopentadiényl, tert.-butyl-amino)diméthyltitane, ce composé ayant pour formule $(CH_3)_2Si((CH_3)_4C_5, (CH_3)_3CN)Ti(CH_3)_2$ ;
- le bis(cyclopentadiényl)dichlorotitane ;
- l'éthylènebis(4,5,6,7-tétrahydro-1-indényl)dichlorotitane ;
- l'éthylènebis(indényl)dichlorotitane ;
- l'isopropylidène(cyclopentadiényl, fluorényl)dichlorotitane ;
- le diméthylsilyl(3-tert.-butyl-cyclopentadiényl, fluorényl)dichlorotitane ;
- le bis(cyclopentadiényl)diméthyltitane ;
- l'éthylènebis(4,5,6,7-tétrahydro-1-indényl)diméthyltitane ;
- l'éthylènebis(indényl)diméthyltitane ;
- l'isopropylidène(cyclopentadiényl, fluorényl)diméthyltitane ;
- le diméthylsilyl(3-tert.-butyl-cyclopentadiényl, fluorényl)diméthyltitane ;
- le diméthylsilyl(tétraméthylcyclopentadiényl, tert-butyl-amino)dichlorotitane, ce dernier composé ayant pour formule $(CH_3)_2Si((CH_3)_4C_5, (CH_3)_3CN)TiCl_2$.

Quant aux cocatalyseurs (b), ils sont notamment choisi parmi :

(b1) les alkylaluminiums de formule (Ia)

$$Al(R^8)_3 \qquad (Ia)$$

dans laquelle les $R^8$, identiques ou différents, représentent alkyle, substitué ou non, comportant de 1 à 12 atomes de carbone tel qu'éthyle, isobutyle, n-hexyle et n-octyle ; alcoxy ; aryle ; halogène ; hydrogène ou oxygène ; au moins un $R^8$ représentant alkyle ;

(b2) les sesquihalogénures d'aluminium ;

(b3) les composés de formule (IIIa) consistant en les composés de formule (III) tels que définis ci-dessus, dans laquelle Y = Al ;

(b4) les composés de formule (IV) tels que définis ci-dessus.

A titre d'exemples de cocatalyseur (b), on peut citer le méthylaluminoxane, le triisobutylaluminium et le triéthylaluminium.

Comme cela a été évoqué ci-dessus, le catalyseur métallocène peut être préimprégné sur le support activateur. Cette préimprégnation peut être conduite comme suit :

On place le support activateur en suspension dans un solvant choisi parmi les hydrocarbures aliphatiques, alicycliques ou aromatiques, avec le métallocène. L'opération est réalisée entre 0 et 140°C, pendant 1 h à 10 heures. La proportion de métallocène représente entre 0,01 et 20% en masse par rapport au support activateur. En fin d'opération, le milieu est décanté pour éliminer le surnageant. Le support est alors lavé plusieurs fois, entre 20 et 140°C, par une quantité de solvant comprise entre 50 et 300 ml par gramme de support.

Par ailleurs, comme déjà également évoqué ci-dessus, le métallocène (a) peut avoir été soumis à une préalkylation ; dans le cas où l'on prévoit une préimprégnation du support activateur par le métallocène (a), cette préalkylation peut avoir lieu soit avant, soit après la préimprégnation.

La préalkylation peut être conduite avec un agent alkylant, tel qu'un alkyllithium ou un alkylmagnésium, le groupe alkyle, à chaîne droite ou ramifié, ayant de 1 à 20 atomes de carbone, dans les conditions suivantes :

Le métallocène ou le solide imprégné sont placés dans un tube de Schlenk contenant 10 à 50 ml d'un solvant choisi parmi les hydrocarbures aliphatiques, alicycliques ou aromatiques, par gramme de support ou pour 10 milligrammes de métallocène. La température du milieu est portée entre -100 et 0°C. On introduit alors entre 1 et 5 moles d'agent alkylant par mole de métallocène. Après l'introduction, on laisse le milieu réactionnel revenir lentement à température ambiante. L'opération complète dure entre 1 et 10 heures.

Dans le système catalytique selon l'invention, le rapport molaire Al du cocatalyseur (b1) ou (b2) au métal de

transition du métallocène est notamment de 1 à 10 000, en particulier de 1 à 2 000 ; et le rapport molaire Al du cocatalyseur (b3) ou (b4) au métal de transition du métallocène (a) est notamment de 1 à 10 000, en particulier de 10 à 200. Par ailleurs, le solide activateur est utilisé notamment à raison de 0,01 à 2 000 mg, en particulier de 0,01 à 200 mg, par μmole de catalyseur métallocène.

La présente invention porte également sur un procédé d'homopolymérisation ou de copolymérisation des oléfines, en suspension ou en phase gazeuse, en présence d'un système catalytique tel que défini ci-dessus.

Les oléfines pouvant être utilisées pour la polymérisation (homo- et copolymérisation) sont, par exemple, les oléfines comportant de deux à vingt atomes de carbone et, en particulier, les alpha-oléfines de ce groupe. Comme oléfine, on peut citer l'éthylène, le propylène, le 1-butène, le 4-méthyl-1-pentène, le 1-octène, le 1-hexène, le 3-méthyl-1-pentène, le 3-méthyl-1-butène, le 1-décène, le 1-tétradécène, ou leurs mélanges. En particulier, l'oléfine est l'éthylène.

Dans le cas où le procédé de polymérisation est conduit en suspension, on peut procéder de la façon suivantes : dans un réacteur, on introduit une suspension du système catalytique en milieu inerte, tel qu'un hydrocarbure aliphatique, la concentration du métallocène (a) étant de 0,5 μmole/l à 10 μmoles/l, celle du cocatalyseur (b) étant de 0,01 à 5 mmoles/l, la quantité de solide activateur étant de 0,5 à 1000 mg/l, puis on introduit la ou les oléfines sous une pression de 1 à 250 bars, la (co)polymérisation étant conduite à une température de -20°C à 250°C, pendant un laps de temps de 5 minutes à 10 heures.

Comme hydrocarbure aliphatique, on peut utiliser le n-heptane, le n-hexane, l'isohexane, l'isopentane ou l'isobutane.

Les conditions préférées sont les suivantes :

- pression de 0,5 à 60 bars ;
- température de 10°C à une température légèrement inférieure à la température de fusion du polymère (5°C en dessous de cette température de fusion).

Dans le cas où la polymérisation est conduite en phase gazeuse, on procède comme suit : on injecte la ou les oléfines sous une pression de 1-60 bars, à une température de 10 à 110°C, dans un réacteur comportant un lit agité et/ou à lit fluidisé du système catalytique. Dans ce cas, le catalyseur métallocène a été imprégné sur le support activateur et le cocatalyseur est introduit par injection dans le réacteur ou par imprégnation sur une charge solide injectée dans le réacteur.

Les procédés de polymérisation précités peuvent faire intervenir un agent de transfert de chaîne , de manière à contrôler l'indice de fluidité du polymère à produire. Comme agent de transfert de chaîne, on peut utiliser l'hydrogène, que l'on introduit en quantité pouvant aller jusqu'à 90% et se situant de préférence entre 0,01 et 60% en moles de l'ensemble oléfine et hydrogène amené au réacteur.

Pour le cas où l'on souhaite un excellent contrôle morphologique des particules de polymère, il est recommandé de réaliser une prépolymérisation en suspension ou, de préférence, en phase gazeuse, sur le système catalytique de l'invention, puis d'introduire les particules de prépolymère ainsi obtenues dans le procédé de (co)polymérisation proprement dit en suspension ou en phase gazeuse. La prépolymérisation est effectuée jusqu'à un degré adapté au procédé de polymérisation dans lequel le prépolymère sera ultérieurement mis en oeuvre.

Les Exemples suivants illustrent la présente invention sans toutefois en limiter la portée. Dans ces exemples, les abréviations suivantes ont été utilisées pour les (co)polymères préparés :

| | |
|---|---|
| $\overline{Mw}$ = | masse moléculaire moyenne en poids |
| $\overline{Mn}$ = | masse moléculaire moyenne en nombre, ces masses étant déterminées par SEC |
| Mw/Mn = | polymolécularité |
| % mm = | pourcentage de diades méso, déterminé par RMN. |

Les solides activateurs des catalyseurs métallocènes préparés ont été notés d'après les étapes de préparation : $SiO_2$/agent de fonctionnalisation/$O_2$ (oxygénation)/F (fluoration).

Les activités et productivités sont considérées comme nulles lorsqu'elles sont inférieures respectivement à $10^2$ g/mol.h ou g/mol.

Tous les récipients et réacteurs utilisés ont été purgés par de l'argon et, sauf précision, les synthèses ont été réalisées sous atmosphère d'argon.

S'agissant des (co)polymérisations, en l'absence d'une autre indication, les concentrations sont rapportées à la quantité de solvant utilisé pour la (co)polymérisation.

Agents de fonctionnalisation des groupes silanol de la silice utilisés :

Di (sec. -butoxy)aluminoxytriéthoxysilane

$$(C_2H_5O)_3\text{-Si-O-Al-}(OC_4H_9)_2$$

$MgBu_2$ = n-butyl sec.-butyl magnésium
TEA = triéthylaluminium

Catalyseurs métallocènes utilisés :

$Cp_2ZrCl_2$, $Ind_2ZrCl_2$, $Ind_2ZrMe_2$, $Me_2Si(Ind)_2ZrCl_2$, $Et(Ind)_2ZrCl_2$ : définis ci-dessus.

Cocatalyseurs utilisés :

MAO = méthylaluminoxane
TiBA = triisobutylaluminium
TEA = triéthylaluminium

Dans l'expression de l'activité (il s'agit de l'activité maximum, sauf mention contraire) en g de (co)polymère/$g_{cata}$.h et de la productivité en g de (co)polymère/$g_{cata}$, $g_{cata}$ signifie masse de solide activateur + masse de métallocène.

I - POLYMÉRISATION DE L'ÉTHYLÈNE

| | |
|---|---|
| Pression | 4 bars |
| Température | 80°C |
| Milieu de suspension | 300 cm $^3$ d'heptane |

Exemple 1 :

(a) Préparation du solide activateur $SiO_2$/Dibutoxyaluminoxytriéthoxysilane/$O_2$/F

De la silice ayant une surface spécifique de 300 $m^2$/g, commercialisée sous la dénomination "GRACE 332" par la Société Grace est traitée sous vide dynamique selon le programme de température suivant :

- de 20°C à 100°C en 30 minutes ;
- de 100°C à 130°C en 30 minutes ;
- de 130°C à 450°C en 1 heure 30 ;
- palier à 450°C pendant 2 heures.

Ce traitement fournit une silice qui contient 1 mmole d'OH/g. 1 gramme de la silice traitée thermiquement est mis en suspension dans 20 $cm^3$ d'heptane. Cette suspension est traitée par 846 mg de dibutoxyaluminoxytriéthoxysilane (352,5 g/mole) à 50°C pendant 1 heure. En fin de réaction, on ajoute 100 $cm^3$ d'heptane. Après 10 minutes d'agitation, la suspension est décantée pour prélever le surnageant. L'opération de lavage est répétée 3 fois. Après le dernier lavage, la souche est séchée 1 heure à 100°C sous vide dynamique. Cette souche est ensuite traitée en lit fluidisé par l'argon suivant le programme de température :

- de 20°C à 130°C en 1 heure ;
- de 130°C à 450°C en 1 heure ;
- palier à 450°C pendant 1 heure ;
- de 450°C à 20°C en 2 heures.

Cette étape est suivie par un traitement thermique identique au précédent mais en fluidisant la souche avec de l'oxygène.
On ajoute ensuite 62 mg de $(NH_4)_2SiF_6$ (178 g/mole). Ce mélange, légèrement fluidisé par un courant d'argon, subit le traitement thermique suivant :

- de 20°C à 130°C en 1 heure ;
- de 130°C à 450°C en 1 heure ;
- palier à 450°C pendant 1 heure ;
- de 450°C à 20°C en 2 heures.

On obtient ainsi le solide ① .

(b) Polymérisation de l'éthylène

Dans un ballon de 1 litre, on place 300 $cm^3$ d'heptane, 0,1 $cm^3$ d'une solution de MAO (1,53 mole/l en aluminium dans le toluène), 17 mg du composé solide ① , 0,9 µmole de $Cp_2ZrCl_2$. Cette suspension est injectée dans un réacteur de 500 $cm^3$. La température de polymérisation est de 80°C, et la pression d'éthylène est maintenue à 4 bars durant 60 minutes. On récupère 6,6 g de polyéthylène de :

- $\overline{Mw}$ = 227 000
- $\overline{M}n$ = 43 330
- $\overline{Mw}/\overline{Mn}$ = 5,2

Exemple 2 :

(a) Préparation du solide activateur $SiO_2/MgBu_2/F$

La silice utilisée dans cet exemple est identique à celle de l'Exemple 1 et a subi le même traitement thermique. 4,6 g de cette silice sont mis en suspension dans 20 $cm^3$ d'heptane. Cette suspension est traitée par 13,5 $cm^3$ d'une solution de $MgBu_2$ dans l'hexane (1 mole/l) à 50°C pendant 1 heure. En fin de réaction, on ajoute 100 $cm^3$ d'heptane. Après 10 minutes d'agitation, la suspension est décantée pour prélever le surnageant. L'opération de lavage a été répétée 3 fois. Après le dernier lavage, la souche est séchée 1 heure à 100°C sous vide dynamique.
On ajoute ensuite 238 mg de $(NH_4)_2SiF_6$. Ce mélange, légèrement fluidisé par un courant d'argon, subit le traitement thermique défini à la fin du point (a) de l'Exemple 1.
On obtient ainsi le solide ② .

(b) Polymérisation de l'éthylène

On conduit cette polymérisation comme à l'Exemple 1(b), excepté que l'on utilise 16 mg du composé solide ② .
Les résultats sont rapportés dans le Tableau 1.

Exemple 3 :

(a) Préparation du solide activateur $SiO_2$/TEA/F

La silice utilisée dans cet exemple est identique à celle de l'Exemple 1 et a subi le même traitement thermique. 1 g de cette silice est mis en suspension dans 20 $cm^3$ d'heptane. Cette suspension est traitée par 0,8 $cm^3$ de TEA (1,5 mole/l dans l'heptane) à 50°C pendant 1 heure. En fin de réaction, on ajoute 100 $cm^3$ d'heptane. Après 10 minutes d'agitation, la suspension est décantée pour prélever le surnageant. L'opération de lavage est répétée 3 fois. Après le dernier lavage, la souche est séchée 1 heure à 100°C sous vide dynamique.
On ajoute ensuite 62 mg de $(NH_4)_2SiF_6$ (178 g/mole). Ce mélange, légèrement fluidisé par un courant d'azote, subit le traitement thermique défini à la fin du point (a) de l'Exemple 1.
On obtient ainsi le solide ③ .

(b) Polymérisation de l'éthylène

On conduit cette polymérisation comme à l'Exemple 1(b), excepté que l'on utilise 14 mg du composé solide ③ .
Les résultats sont également rapportés dans le Tableau 1.

Exemple 4 (comparatif) : Polymérisation de l'éthylène en l'absence de solide activateur de catalyseur métallocène

On conduit cette polymérisation comme à l'Exemple 1, excepté que l'on n'utilise pas de composé solide. Le polyéthylène obtenu a les caractéristiques suivantes :

- $\overline{Mw}$ = 214 600
- $\overline{M}n$ = 30 940
- $\overline{Mw}/\overline{Mn}$ = 6,9

Les résultats sont également rapportés dans le Tableau 1.

Tableau 1

Polymérisation de l'éthylène

Catalyseur métallocène : $Cp_2ZrCl_2$ à raison de 3 µmoles/l

Cocatalyseur = MAO à raison de 0,5 mmole/l

| Exemple | Solide activateur du catalyseur (mg) | Activité (gPE/molZr.h) | Productivité (gPE/molZr) | Activité ($gPE/g_{cata}.h$) | Productivité ($gPE/g_{cata}$) | Activation* |
|---|---|---|---|---|---|---|
| 1 | Solide ① (17) | $7,31 \times 10^6$ | $4,30 \times 10^6$ | 433,5 | 255 | 5,0 |
| 1 | Solide ② (16) | $2,19 \times 10^6$ | $1,36 \times 10^6$ | 147 | 91 | 1,5 |
| 3 | Solide ③ (14) | $2,04 \times 10^6$ | $1,61 \times 10^6$ | 137 | 108 | 1,4 |
| 4 (comparatif) | — | $1,46 \times 10^6$ | $0,89 \times 10^6$ | — | — | — |

* Activation = rapport entre activité avec solide et activité sans solide (en prenant en compte les activités rapportées à la quantité de zirconium)

Exemple 5 :

On conduit une polymérisation de l'éthylène dans les conditions de l'Exemple 1(b), excepté qu'on remplace le MAO par 0,4 $cm^3$ de TiBA (1,4 mole/l dans l'heptane, soit 2 mmoles/l) et que le solide ① a été utilisé à raison de 15 mg au lieu de 17 mg.
Les résultats sont les suivants :

- Activité (gPE/mole Zr.h) : 0,90 x $10^6$
- Productivité (gPE/mole Zr) : 0,70 x $10^6$

Exemple 6 (Comparatif) :

On conduit une polymérisation de l'éthylène comme à l'Exemple 5, excepté que l'on n'utilise pas de composé solide activateur du catalyseur.
L'activité et la productivité sont nulles.

Exemple 7 :

On procède comme à l'Exemple 5, excepté que l'on remplace le TiBA par 1,0 $cm^3$ de TEA (1,5 mole/l dans l'heptane, soit 5 mmoles/l).
Les résultats sont les suivants :

- Activité (gPE/mole Zr.h) : 0,49 x $10^6$
- Productivité (gPE/mole Zr) : 0,36 x $10^6$

Exemple 8 (Comparatif) :

On conduit une polymérisation de l'éthylène comme à l'Exemple 7, excepté que l'on n'utilise pas de composé solide activateur du catalyseur.
Les résultats sont les suivants :

- Activité (gPE/mole Zr.h) : 1100
- Productivité (gPE/mole Zr) : 880

Exemple 9 :

On conduit une homopolymérisation de l'éthylène comme à l'Exemple 5, excepté que l'on remplace les 0,9 µmole de $Cp_2ZrCl_2$ par 0,9 µmole de $Ind_2ZrCl_2$.
Les résultats sont rapportés dans le Tableau 2.

Exemple 10 :

On conduit une homopolymérisation de l'éthylène comme à l'Exemple 9, excepté que l'on utilise 0,1 mmole/l de TiBA comme cocatalyseur.
Les résultats sont rapportés dans le Tableau 2.

Exemple 11 (Comparatif) :

On conduit une homopolymérisation de l'éthylène comme à l'Exemple 9, excepté que l'on n'utilise pas de composé solide activateur du catalyseur.
Les résultats sont rapportés dans le Tableau 2.

Tableau 2

Polymérisation de l'éthylène

Catalyseur métallocène : $Ind_2ZrCl_2$ à raison de 3 µmoles/l

Solide activateur du catalyseur (excepté pour l'Exemple 11) = solide ① à raison de 10 mg

| Exemple | Cocatalyseur (mmol/l) | Activité (gPE/molZr.h) | Productivité (gPE/molZr) |
|---|---|---|---|
| 9 | TiBA (2) | $1,06 \times 10^6$ | $6,67 \times 10^5$ |
| 10 | TiBA (0,1) | $6,72 \times 10^6$ | $4,08 \times 10^5$ |
| 11 (comparatif) | TiBA (2) | $1,89 \times 10^5$ | $1,57 \times 10^5$ |

Exemple 12 :

On conduit une homopolymérisation de l'éthylène comme à l'Exemple 5, excepté que l'on remplace les 0,9 µmole de $Cp_2ZrCl_2$ par 0,9 µmole de $Ind_2ZrMe_2$.

Les résultats sont rapportés dans le Tableau 3.

Exemples 13 et 14 :

On conduit une homopolymérisation de l'éthylène comme à l'Exemple 12, excepté que l'on utilise respectivement 0,5 et 0,1 mmole/l de TiBA comme cocatalyseur.

Les résultats sont rapportés dans le Tableau 3.

Exemple 15 (Comparatif) :

On conduit une homopolymérisation de l'éthylène comme à l'exemple 12, excepté que l'on n'utilise pas de composé solide activateur du catalyseur.

Les résultats sont rapportés dans le Tableau 3.

Tableau 3

Polymérisation de l'éthylène

Catalyseur métallocène : $Ind_2ZrMe_2$ à raison de 3 µmoles/l

Solide activateur du catalyseur (excepté pour l'Exemple 15) = solide ① à raison de 7,5 mg

| Exemple | Cocatalyseur (mmole/l) | Activité (gPE/molZr.h) | Productivité (gPE/molZr) |
|---|---|---|---|
| 12 | TiBA (2) | $2,37 \times 10^6$ | $1,38 \times 10^6$ |
| 13 | TiBA (0,5) | $2,46 \times 10^6$ | $1,40 \times 10^6$ |
| 14 | TiBA (0,1) | $1,32 \times 10^7$ | $7,37 \times 10^6$ |
| 15 (comparatif) | TiBA (2) | 0 | 0 |

Exemple 16 :

On conduit une homopolymérisation de l'éthylène comme à l'Exemple 5, excepté que l'on remplace les 0,9 µmole de $Cp_2ZrCl_2$ par 0,9 µmole de $Me_2Si(Ind)_2ZrCl_2$ et que l'on utilise le cocatalyseur TiBA à raison de 5 mmoles/l.

Les résultats sont les suivants :

- Activité (gPE/molZr.h) : 2,02 x $10^6$
- Productivité (gPE/mol Zr) : 1,88 x $10^6$

Exemple 17 (Comparatif) :

On conduit une homopolymérisation de l'éthylène comme à l'Exemple 16, excepté que l'on n'utilise pas de composé solide activateur de catalyseur.

L'activité et la productivité sont nulles.

Exemple 18 :

(a) Préparation du solide activateur : solide ①

On procède comme à l'Exemple 1(a).

(b) Préimprégnation du solide par $Cp_2ZrCl_2$

417 mg de solide ① sont ensuite mis en suspension dans 50 $cm^3$ de toluène avec 70 mg de $Cp_2ZrCl_2$ à 70°C pendant 15 heures. En fin d'opération, le milieu est décanté pour éliminer le surnageant. On pratique 4 lavages au toluène à 70°C pendant 15 minutes. Chaque lavage est entrecoupé d'une décantation suivie de l'élimination du surnageant. Finalement, on pratique un séchage à 40°C pendant 40 minutes.

On obtient le solide (1').

(c) Polymérisation de l'éthylène

Dans un ballon de 1 litre, on place 300 $cm^3$ d'heptane, 0,10 $cm^3$ de MAO (1,53 mole/l en aluminium dans le toluène), 10 mg de solide préimprégné (1'). Cette suspension est injectée dans un réacteur de 500 $cm^3$. La température de polymérisation est de 80°C et la pression d'éthylène, de 4 bars. En 60 minutes, on récupère 2,2 g de polyéthylène.

Les résultats obtenus sont rapportés dans le Tableau 4.

Exemples 19 et 20 :

On a procédé comme à l'Exemple 18, excepté que l'on a utilisé les solides activateurs respectivement ② et ③ pour obtenir les solides respectivement (2') et (3').

A l'Exemple 19, on a utilisé 1,19 g de solide activateur ② et 55 mg de $Cp_2ZrCl_2$.

A l'Exemple 20, on a utilisé 877 mg de solide activateur ③ et 80 mg de $Cp_2ZrCl_2$.

Les résultats sont rapportés dans le Tableau 4.

Tableau 4

Polymérisation de l'éthylène

Catalyseur métallocène : $Cp_2ZrCl_2$

Cocatalyseur : MAO à raison de 0,5 mmole/l

| Exemple | % de Zr du catalyseur métallocène imprégné sur le solide | Masse de catalyseur ou solide activateur imprégné (mg) | Activité (gPE/molZr.h) | Activité ($gPE/g_{cata}.h$) |
|---|---|---|---|---|
| 18 | 0,93 | Solide (1') (10) | $4,71 \times 10^6$ | 480 |
| 19 | 1,05 | Solide (2') (10) | $6,08 \times 10^6$ | 700 |
| 20 | 0,45 | Solide (3') (9) | $1,43 \times 10^7$ | 220 |

Exemple 21 :

(a) Préparation du solide activateur

On procède comme pour le solide ② de l'Exemple 2(a).

(b) Préalkylation du métallocène

80 mg de $Cp_2ZrCl_2$ sont solubilisés dans 20 $cm^3$ de toluène. La température de la solution est ensuite abaissée à -80°C. On ajoute alors goutte à goutte 0,35 $cm^3$ de méthyllithium (1,6 mole/l dans l'éther). A la fin de l'addition, on laisse le milieu réactionnel revenir doucement à la température ambiante. Après décantation, on prélève le surnageant.

(c) Préimprégnation

Le solide ② de l'étape (a) et le surnageant de l'étape (b) sont mélangés dans 30 $cm^3$ d'heptane. La suite de la préimprégnation est fidèle à celle de l'Exemple 18(b).

(d) Polymérisation de l'éthylène

On conduit la polymérisation de l'éthylène en procédant comme à l'Exemple 18(c).
Les résultats obtenus sont les suivants :

- % de Zr imprégné sur le solide : 1,60
- Cocatalyseur : MAO à raison de 0,5 mmole/l
- Activité (gPE/molZr.h) : 2,85 x $10^6$
- Activité (gPE/$g_{cata}$.h) : 500.

Exemple 22 :

(a) Préparation du solide activateur

On procède comme pour le solide ② de l'Exemple 2(a).

(b) Préimprégnation du métallocène

On procède comme à l'Exemple 18(b).

(c) Préalkylation de métallocène

Le solide préimprégné est mis en suspension dans 20 $cm^3$ de toluène. La température de la suspension est ensuite abaissée à -80°C. On ajoute alors goutte à goutte 0,14 $cm^3$ de méthyllithium (1,6 mole/l dans l'éther). A la fin de l'addition, on laisse le milieu réactionnel revenir doucement à température ambiante. Après décantation, on élimine le surnageant. Le solide est séché à 40°C pendant 30 minutes.

(d) Polymérisation

On conduit la polymérisation de l'éthylène en procédant comme à l'Exemple 18(c).
Les résultats sont les suivants :

- % de Zr imprégné sur le solide : 0,60
- Cocatalyseur : MAO à raison de 0,5 mmole/l
- Activité (gPE/molZr.h) : 3,64 x $10^6$
- Activité (gPE/$g_{cata}$.h) : 240.

Exemple 23 :

On procède comme à l'Exemple 1, excepté que l'on utilise le cocatalyseur TiBA à la place du cocatalyseur MAO, toujours à raison de 0,5 mmole/l.

Les résultats sont indiqués dans le Tableau 6.

Exemples 24 à 29 (Comparatifs) :

On a répété l'Exemple 23, excepté qu'on a utilisé, comme solide activateur, la silice $SiO_2$ calcinée selon la technique de l'Exemple 1(a) ou une silice modifiée d'une manière différente de celle selon la présente invention : par fluoration de $SiO_2$ ou de $SiO_2$/dibutoxyaluminoxytriéthoxysilane par $(NH_4)_2SiF_6$ dans le cas des Exemples respectivement 25 et 27 ; en s'arrêtant aux stades respectivement $SiO_2$/Dibutoxyaluminoxytriéthoxysilane et $SiO_2$/Dibutoxyaluminoxytriéthoxysilane/$O_2$ dans le cas des Exemples respectivement 26 et 28 ; par chloration de $SiO_2$/Dibutoxyaluminoxytriéthoxysilane/$O_2$ par $NH_4Cl$ dans le cas de l'Exemple 29.

Les modes opératoires des Exemples 25, 27 et 29 peuvent être résumés comme suit :

Exemple 25

On utilise la silice de l'Exemple 1 ayant subi le traitement thermique initial (silice contenant 1 mmole d'OH/g).

A 2 g de cette silice, on ajoute 140 mg de $(NH_4)_2SiF_6$ et on fait subir au mélange, légèrement fluidisé par un courant d'argon, le traitement thermique indiqué à la fin de l'Exemple 1(a).

Exemple 27

On procède comme à l'Exemple (la) excepté que l'on ajoute 62 mg de $(NH_4)_2SiF_6$ à la souche fonctionnalisée par le dibutoxyaluminoxytriéthoxysilane, séchée 1 heure à 100°C sous vide dynamique, et on fait subir au mélange, légèrement fluidisé par un courant d'argon, le traitement thermique indiqué à la fin de l'Exemple 1(a). Le traitement thermique à l'oxygène de l'Exemple 1(a) n'est pas effectué ici.

Exemple 29

On procède comme à l'Exemple 1(a) excepté que l'on remplace $(NH_4)_2SiF_6$ par $NH_4Cl$.

Les résultats sont également indiqués dans le Tableau 5.

Tableau 5

Polymérisation de l'éthylène

Catalyseur métallocène : $Cp_2ZrCl_2$ à raison de 3 µmoles/l

Cocatalyseur : TiBA à raison de 0,5 mmole/l

Quantité de solide activateur

| Exemple | Solide activateur | Productivité (gPE/molZr) |
|---|---|---|
| 23 | $SiO_2$/Dibutoxyaluminoxytriéthoxysilane/$O_2$/F | $6,20 \times 10^5$ |
| 24 (comp.) | $SiO_2$ | 0 |
| 25 (comp.) | $SiO_2$/F | 0 |
| 26 (comp.) | $SiO_2$/Dibutoxyaluminoxytriéthoxysilane | 0 |
| 27 (comp.) | $SiO_2$/Dibutoxyaluminoxytriéthoxysilane/F | $9,76 \times 10^4$ |
| 28 (comp.) | $SiO_2$/Dibutoxyaluminoxytriéthoxysilane/$O_2$ | 0 |
| 29 (comp.) | $SiO_2$/Dibutoxyaluminoxytriéthoxysilane/$O_2$/Cl | 0 |

II - POLYMÉRISATION DU PROPYLÈNE

| | |
|---|---|
| Pression | 4 bars |
| Température | 40°C |
| Milieu de suspension | 500 $cm^3$ d'heptane |

Exemple 30 :

(a) Préparation du solide ①

On procède comme à l'Exemple 1(a)

(b) Polymérisation du propylène

Dans un ballon de 1 litre, on place 500 $cm^3$ d'heptane, 0,16 $cm^3$ de MAO (1,53 mole/l en aluminium dans le toluène), 17 mg du composé solide obtenu en (a), 1,5 µmole de $EtInd_2ZrCl_2$ (5,56 x $10^{-4}$ mole/l dans le toluène). Cette suspension est injectée dans le réacteur de 1 1. La température de polymérisation est de 40°C et la pression de propylène, de 4 bars. En 75 minutes, on récupère 24 g de polypropylène avec un point de fusion de 137,6°C, % mm 89,6.
Les résultats sont indiqués dans le Tableau 6.

Exemple 31 (Comparatif) :

On procède comme à l'Exemple 30, excepté que l'on n'utilise pas de solide activateur de catalyseur.
Les résultats sont également indiqués dans le Tableau 6.

Exemple 32 :

On procède comme à l'Exemple 30, excepté que l'on remplace les 1,5 µmole de $Et(Ind)_2ZrCl_2$ par 1,5 µmole de $Me_2Si(Ind)_2ZrCl_2$.
Les résultats sont également indiqués dans le Tableau 6.

Exemple 33 (comparatif) :

On procède comme à l'Exemple 32, excepté que l'on n'utilise pas de solide activateur de catalyseur.
Les résultats sont également indiqués dans le Tableau 6.

**Tableau 6**

**Catalyseur métallocène utilisé à raison de 3 µmoles/l**

**Cocatalyseur : MAO à raison de 0,5 mmole/l**

| Exemple | Catalyseur métallocène | Solide activateur du catalyseur (mg) | Activité (gPP/molZr.h) | Productivité (gPP/mol Zr) | Activité ($gPP/g_{cata}.h$) | Productivité ($gPP/g_{cata}$) |
|---|---|---|---|---|---|---|
| 30 | $Et(Ind)_2ZrCl_2$ | Solide ① (16) | $1,67 \times 10^7$ | $1,17 \times 10^7$ | 1582 | 1108 |
| 31 (comp.) | " | — | $1,04 \times 10^7$ | $0,81 \times 10^7$ | - | - |
| 32 | $Me_2Si(Ind)_2ZrCl_2$ | Solide ① (16) | $0,89 \times 10^7$ | $0,37 \times 10^7$ | 974 | 405 |
| 33 (comp.) | " | — | $0,44 \times 10^7$ | $0,34 \times 10^7$ | - | - |

| Exemple | $\overline{Mw}$ | $\overline{Mn}$ | $\overline{Mw}/\overline{Mn}$ | Tfusion (°C) | % mm |
|---|---|---|---|---|---|
| 30 | 37890 | 16970 | 2,23 | 137,6 | 89,6 |
| 31 (comp.) | 38150 | 19270 | 1,98 | 135,8 | 89,8 |
| 32 | 62830 | 27930 | 2,25 | 145,0 | 92,8 |
| 33 (comp.) | 61740 | 26670 | 2,31 | 144,3 | 90,9 |

III - COPOLYMÉRISATION ÉTHYLÈNE - HEXENE

Exemple 34 :

Dans un ballon de 1 litre, on introduit successivement 300 $cm^3$ d'heptane, 5 $cm^3$ d'hexène-1, 0,15 $cm^3$ de TiBA (1 mole/l dans l'heptane), 18 mg de Solide ① et 1 x $10^{-7}$ mole de $Et(Ind)_2ZrCl_2$. Cette suspension est introduite dans un réacteur de 500 $cm^3$ conditionné sous atmosphère inerte. A la fin de cette introduction, l'éthylène est introduit progressivement avec la montée en température pour atteindre 4 bars à 80°C.
Après 30 minutes de polymérisation, on récupère 17,1 g de copolymère à 6,9% massique d'hexène (analyse infrarouge), avec un point de fusion de 113°C.
Les résultats sont indiqués dans le Tableau 7.

Exemple 35 (Comparatif) :

On procède comme à l'Exemple 34, excepté que l'on n'utilise pas de solide activateur, et que le catalyseur métallocène est utilisé à raison de 3 μmoles/l et que le TiBA est utilisé à raison de 1 mmole/l.
On ne récupère pas de polymère (cf Tableau 7).

Exemple 36 :

Dans un ballon de 1 litre, on ajoute successivement 300 $cm^3$ d'heptane, 5 $cm^3$ d'hexène-1, 0,13 $cm^3$ de TiBA (1 mole/l dans l'heptane).
Dans un ballon de 50 $cm^3$, on introduit 22 mg de Solide ① , 0,2 $cm^3$ de TiBA et, après 5 minutes d'agitation, on introduit 1,5 x $10^{-7}$ mole de $Et(Ind)_2ZrCl_2$ en solution dans le toluène.
Le contenu du ballon de 50 $cm^3$ est introduit dans le ballon de 500 $cm^3$. Le tout est alors introduit dans le réacteur de polymérisation. L'essai a lieu à 80°C sous 4 bars d'éthylène. Après 30 minutes de polymérisation, on obtient 20,2 g de polymère.
Les résultats sont indiqués dans le Tableau 7.

Exemple 37 (Comparatif) :

On procède comme à l'Exemple 35, excepté que le catalyseur métallocène est utilisé à raison de 0,5 μmole/l et que le TiBA est remplacé par MAO utilisé à raison de 0,5 mmole/l, en respectant les proportions d'aluminium.
On récupère 14,6 g de copolymère après 30 minutes de polymérisation.
Les résultats sont également rapportés dans le Tableau 7.

**Tableau 7**

**Copolymérisation de l'éthylène et de l'hexène-1**

**Pression = 4 bars d'éthylène**

**Température = 80°C**

**Milieu de suspension = 300 $cm^3$ d'heptane**

| Exemple | µmole/l de catalyseur $Et(Ind)_2ZrCl_2$ | Solide activateur du catalyseur (mg) | Cocatalyseur (mmole/l) | Productivité sur 30 minutes (gCOPO/molZr) |
|---|---|---|---|---|
| 34 | 0,5 | Solide ① (18) | TiBA (0,5) | $1,71 \times 10^8$ |
| 35 (comp.) | 3 | — | TiBA (1) | 0 |
| 36 | 0,5 | Solide ① (22) | TiBA (0,5) | $1,34 \times 10^8$ |
| 37 (comp.) | 0,5 | — | MAO (0,5) | $9,73 \times 10^7$ |

## Revendications

1. Support solide activateur des métallocènes en tant que catalyseurs dans la polymérisation des oléfines, **caractérisé par le fait qu'**il consiste en un ensemble de particules de support de composant catalytique solide, formées

d'au moins un oxyde minéral poreux, lesdites particules ayant été modifiées pour porter, en surface, des sites acides de Lewis, aluminiques et/ou magnésiens, de formule :

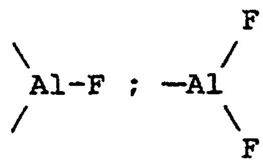

ou -Mg-F, les groupes

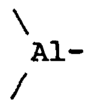

provenant d'un agent de fonctionnalisation ayant réagi sur des radicaux -OH portés par les particules de base du support, la réaction de fonctionnalisation ayant été suivie par une réaction de fluoration.

2. Support selon la revendication 1, **caractérisé par le fait que** les oxydes minéraux sont choisis parmi la silice, l'alumine et leurs mélanges.

3. Support selon l'une des revendications 1 et 2, **caractérisé par le fait que** les particules comportent des pores d'un diamètre allant de 7,5 à 30 nm.

4. Support selon l'une des revendications 1 à 3, **caractérisé par le fait que** les particules présentent une porosité allant de 1 à 4 $cm^3/g$.

5. Support selon l'une des revendications 1 à 4, **caractérisé par le fait que** les particules présentent une surface spécifique allant de 100 à 600 $m^2/g$.

6. Support selon l'une des revendications 1 à 5, **caractérisé par le fait qu'**elles présentent un diamètre moyen allant de 1 à 100 µm.

7. Support selon l'une des revendications 1 à 6, **caractérisé par le fait que** les particules présentent à leur surface, de 0,25 à 10, notamment de 0,5 à 4, desdits sites acides de Lewis aluminiques et/ou magnésiens au moins partiellement fluorés par $nm^2$.

8. Support selon l'une des revendications 1 à 7, **caractérisé par le fait que** lesdits sites acides de Lewis aluminiques et/ou magnésiens au moins partiellement fluorés sont formés par la réaction de radicaux -OH portés par les particules de base de support avec au moins un agent de fonctionnalisation choisi parmi :

- les composés de la formule (I) :

$$Al(R^1)_3 \qquad (I)$$

dans laquelle les $R^1$, identiques ou différents, représentent chacun un groupe alkyle en $C_1$-$C_{20}$ ;

- les composés de la formule (II):

$$Mg(R^2)_2 \qquad (II)$$

dans laquelle les $R^2$, identiques ou différents, représentent chacun un groupe alkyle en $C_1$-$C_{20}$ ; et

- les composés de la formule (III) :

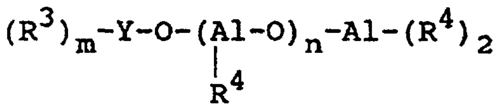

(III)

dans laquelle :

- les $R^3$, identiques ou différents représentent chacun un groupe alkyle en $C_1$-$C_{12}$ ou un groupe alcoxy en $C_1$-$C_{12}$ ;
- les $R^4$, identiques ou différents, représentent chacun un groupe alkyle en $C_1$-$C_{12}$ ou un groupe alcoxy en $C_1$-$C_{12}$ ;
- Y représente Al ou Si, m valant 2 si Y = Al et 3 si Y = Si ; et
- n vaut 0 ou est un entier de 1 à 40, de préférence n valant 0 ou étant un entier de 1 à 20 ;

- les composés de formule (IV) :

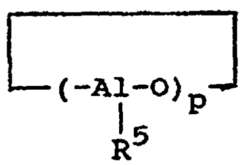

(IV)

dans laquelle :

- les $R^5$ représentent chacun un groupe alkyle en $C_1$-$C_8$ ; et
- p est un entier de 3 à 20,

ladite réaction de fonctionnalisation ayant été suivie par une réaction de fluoration.

**9.** Support selon la revendication 8, **caractérisé par le fait que** le composé (I) est le triéthylaluminium.

**10.** Support selon la revendication 8, **caractérisé par le fait que** le composé (II) est le n-butyl sec.-butyl magnésium.

**11.** Support selon la revendication 8, **caractérisé par le fait que** le composé (III) est le dibutoxyaluminoxytriéthoxysilane $(C_2H_5O)_3Si\text{-}O\text{-}Al\text{-}(OC_4H_9)_2$, le tétraisobutyldialuminoxane $(iBu)_2Al\text{-}O\text{-}Al(iBu)_2$, et les alkyl aluminoxanes oligomères linéaires, en particulier ceux dans lesquels $R^3$ et $R^4$ sont des groupes méthyle.

**12.** Support tel que défini à l'une des revendications 1 à 11, préimprégné par un catalyseur métallocène, ledit catalyseur métallocène ayant été le cas échéant soumis à un traitement de préalkylation conduit avant ou après la préimprégnation dudit support.

**13.** Procédé de préparation d'un support solide activateur des métallocènes en tant que catalyseurs dans la polymérisation des oléfines, **caractérisé par le fait que** l'on soumet à une fonctionnalisation un ensemble de particules de support de composant catalytique solide, formées d'au moins un oxyde minéral poreux et portant, en surface, des radicaux -OH, en utilisant un agent de fonctionnalisation capable de greffer sur lesdites particules des sites acides de Lewis aluminiques et/ou magnésiens ; puis que l'on soumet lesdites particules de support ainsi greffées à un traitement de fluoration.

**14.** Procédé selon la revendication 13, **caractérisé par le fait que** les oxydes minéraux sont choisis parmi la silice, l'alumine et leurs mélanges.

**15.** Procédé selon l'une des revendications 13 et 14, **caractérisé par le fait que** l'on utilise des particules comportant des pores d'un diamètre allant de 7,5 à 30 nm.

**16.** Procédé selon l'une des revendications 13 à 15, **caractérisé par le fait que** l'on utilise des particules présentant une porosité allant de 1 à 4 $cm^3/g$.

**17.** Procédé selon l'une des revendications 13 à 16, **caractérisé par le fait que** l'on utilise des particules présentant une surface spécifique allant de 100 à 600 $m^2/g$.

**18.** Procédé selon l'une des revendications 13 à 17, **caractérisé par le fait que** l'on utilise des particules présentant un diamètre moyen de 1 à 100 μm.

**19.** Procédé selon l'une des revendications 14 à 18, **caractérisé par le fait que** l'on utilise des particules présentant, à leur surface, de 0,25 à 10, notamment de 0,5 à 4, desdits radicaux -OH par $nm^2$.

**20.** Procédé selon l'une des revendications 13 à 19, **caractérisé par le fait que** l'on utilise un agent de fonctionnalisation tel que défini à l'une des revendications 8 à 11.

**21.** Procédé selon l'une des revendications 13 à 20, **caractérisé par le fait que** l'on conduit la fonctionnalisation en traitant une suspension desdites particules en milieu solvant par ledit agent de fonctionnalisation à une température de -150 à +150°C pendant un laps de temps de 1 minute à 12 heures, puis en récupérant les particules greffées après lavage.

**22.** Procédé selon l'une des revendications 13 à 21, **caractérisé par le fait que** l'on utilise 0,5 à 20 mmoles d'agent de fonctionnalisation par g de particules.

**23.** Procédé selon l'une des revendications 13 à 22, **caractérisé par le fait qu'**après la fonctionnalisation, on conduit un traitement thermique sous gaz inerte, de préférence en lit fluidisé par ledit gaz inerte, ledit traitement étant destiné à éliminer les groupes alcoxy présents en surface.

**24.** Procédé selon l'une des revendications 13 à 23, **caractérisé par le fait que**, préalablement à la fluoration, on conduit un traitement d'oxydation, consistant notamment en un traitement thermique en lit fluidisé par l'oxygène.

**25.** Procédé selon l'une des revendications 13 à 24, **caractérisé par le fait que** l'on effectue la fluoration en mettant en contact avec de l'acide fluorhydrique gazeux les particules de support fonctionnalisées, le cas échéant après traitement thermique sous gaz inerte et/ou après oxydation, à raison notamment de 1 à 5% en poids, en particulier 3 à 5% en poids, de fluor par rapport auxdites particules de support, cette mise en contact étant effectuée pendant un laps de temps d'1 minute à 24 heures, à une température de 20 à 800 °C.

**26.** Procédé selon l'une des revendications 13 à 24, **caractérisé par le fait qu'**on effectue la fluoration par $(NH_4)_2SiF_6$ en mélangeant les particules de support fonctionnalisées, le cas échéant après traitement thermique sous gaz inerte et/ou après oxydation, avec $(NH_4)_2SiF_6$ pulvérulent, à raison notamment de 1 à 5% en poids, en particulier 3 à 5% en poids, de fluor par rapport auxdites particules de support, puis en fluidisant légèrement le mélange précité avec un gaz inerte et en conduisant un traitement thermique à une température d'environ 300 à 500°C pendant environ 1 à 10 heures.

**27.** Système catalytique pour la polymérisation des oléfines, comprenant :

(a) un catalyseur métallocène, lequel a, le cas échéant, été soumis à une préalkylation ;
(b) un cocatalyseur ; et
(c) un support solide activateur du métallocène, tel que défini à l'une dès revendications 1 à 11 ou préparé par le procédé tel que défini à l'une des revendications 13 à 26,

le cocatalyseur (b) pouvant être absent si le catalyseur métallocène (a) a été préalablement alkylé, le support (c) pouvant avoir été imprégné par le catalyseur métallocène (a), lequel a, le cas échéant, été soumis à un traitement de préalkylation conduit soit avant, soit après la préimprégnation dudit support.

**28.** Système catalytique selon la revendication 27, **caractérisé par le fait que** le catalyseur métallocène

(a) est choisi parmi les composés de formule (V) :

$$ML_x \quad (V)$$

dans laquelle :

- M représente un métal de transition appartenant du groupe 4b de la Classification Périodique ;
- L représente un ligand coordiné au métal de transition, au moins un ligand L étant un groupement au squelette de type cycloalcadiényle ; et
- x est égal à la valence du métal de transition, les ligands L, dont le nombre est égal à la valence du métal de transition M, étant identiques ou différents ;

• lorsque le composé (V) contient au moins deux groupements au squelette de type cycloalcadiényle, au moins deux de ces groupements pouvant être liés entre eux par un radical bivalent ;
• lorsqu'un groupement au squelette cycloalcadiényle est substitué, les substituants pouvant être choisis parmi les groupes alkyle en $C_1$-$C_{20}$, alcényle en $C_2$-$C_{20}$, aryle et aralkyle, deux substituants se trouvant dans des positions adjacentes sur un même noyau cyclopentadiényle pouvant être reliés entre eux, formant un cycle aromatique ou non, condensé sur ledit noyau cycloalcadiényle, et, dans le cas où ce dernier est un noyau cyclopentadiényle, le cycle condensé résultant pouvant être un cycle indényle, tétrahydroindényle, fluorényle, octahydrofluorényle ;
• au moins un ligand L pouvant être choisi parmi les groupements de formule -O- ; -S- ; $-NR^6-$ ; ou $-PR^6$ (avec $R^6$ représentant l'hydrogène ou un groupement choisi parmi les groupements silyle, alkyle ou aryle, ces deux derniers étant éventuellement halogénés) dont l'une des valences libres est liée à l'atome de métal de transition M, et l'autre valence libre est liée à un radical bivalent, lui-même lié à un ligand L au squelette cycloalcadiényle ; et les groupements de formule $-OR^7$ ; $-SR^7$ ; $-NR^7_2$ ou $-PR^7_2$ ($R^7$ ayant la même signification que $R^6$ ci-dessus) dont la valence libre est liée à un radical bivalent, lui-même lié à un ligand L au squelette cycloalcadiényle ;
• des ligands L différents de ceux définis ci-dessus pouvant être choisis parmi les groupements hydrocarbonés comportant de 1 à 20 atomes de carbone ; les groupements alcoxy ; et les halogènes.

**29.** Système catalytique selon l'une des revendications 27 et 28, **caractérisé par le fait que** le cocatalyseur (b) est choisi parmi :

(b1) les alkylaluminiums de formule (Ia)

$$Al(R^8)_3 \quad (Ia)$$

dans laquelle les $R^8$, identiques ou différents, représentent alkyle, substitué ou non, comportant de 1 à 12 atomes de carbone ; alcoxy ; aryle ; halogène ; hydrogène ou oxygène ; au moins un $R^8$ représentant alkyle
(b2) les sesquihalogénures d'aluminium ;
(b3) les composés de formule (IIIa) consistant en les composés de formule (III) tels que définis à la revendication 8 dans laquelle Y = Al ;
(b4) les composés de formule (IV) tels que définis à la revendication 8.

**30.** Système catalytique selon la revendication 29, **caractérisé par le fait que** le cocatalyseur (b) est choisi parmi le méthylaluminoxane, le triisobutylaluminium et le triéthylaluminium.

**31.** Système catalytique selon l'une des revendications 27 à 30, **caractérisé par le fait que** le rapport molaire Al du cocatalyseur (b1) ou (b2) au métal de transition du métallocène est de 1 à 10 000, en particulier de 1 à 2 000 ; et le rapport molaire Al du cocatalyseur (b3) ou (b4) au métal de transition du métallocène (a) est de 1 à 10 000, en particulier de 10 à 200.

**32.** Système catalytique selon l'une des revendications 27 à 31, **caractérisé par le fait que** le solide activateur est utilisé à raison de 0,01 à 2 000 mg, en particulier de 0,01 à 200 mg, par µmole de catalyseur métallocène.

**33.** Procédé d'homopolymérisation ou de copolymérisation des oléfines, en suspension ou en phase gazeuse, en présence d'un système catalytique tel que défini à l'une des revendications 27 à 32.

**34.** Procédé selon la revendication 33, **caractérisé par le fait qu'**on utilise des oléfines en $C_2$-$C_{20}$, en particulier des alpha-oléfines telles que l'éthylène, le propylène, le 1-butène, le 4-méthyl-1-pentène, le 1-octène, le 1-hexène, le 3-méthyl-pentène, le 3-méthyl-1-butène, le 1-décène, le 1-tétradécène.

**35.** Procédé selon la revendication 34, **caractérisé par le fait que** l'oléfine à (co)polymériser est l'éthylène.

**36.** Procédé selon l'une des revendications 33 à 35, conduit en suspension, **caractérisé par le fait que**, dans un réacteur, on introduit une suspension en milieu inerte, tel qu'un hydrocarbure aliphatique, du système catalytique, la concentration du métallocène (a) étant de 0,5 µmole/l à 10 µmoles/l, celle du cocatalyseur (b) étant de 0,01 à 5 mmoles/l, la quantité de solide activateur étant de 0,5 à 1000 mg/l, puis on introduit la ou les oléfines sous une pression de 1 à 250 bars, la (co)polymérisation étant conduite à une température de -20°C à 250°C, pendant un laps de temps de 5 minutes à 10 heures.

**37.** Procédé selon la revendication 36, **caractérisé par le fait que** l'on introduit le ou les oléfines sous une pression de 0,5 à 60 bars, et l'on opère à une température de 10°C à une température légèrement inférieure à la température de fusion du polymère.

**38.** Procédé selon l'une des revendications 33 à 35, conduit en phase gazeuse, **caractérisé par le fait qu'**on injecte la ou les oléfines sous une pression de 1-60 bars, à une température de 10 à 110°C, dans un réacteur comportant un lit agité et/ou à lit fluidisé du système catalytique.

**39.** Procédé selon l'une des revendications 33 à 38, **caractérisé par le fait qu'**on opère en présence d'un agent de transfert de chaîne, tel que l'hydrogène.

**40.** Procédé selon l'une des revendications 33 à 39, **caractérisé par le fait qu'**on conduit d'abord une prépolymérisation en suspension ou, de préférence, en phase gazeuse, sur le système catalytique tel que défini à l'une des revendications 27 à 32, puis on introduit les particules de prépolymère ainsi obtenues dans le procédé de (co) polymérisation proprement dit en suspension ou en phase gazeuse.

## Patentansprüche

**1.** Fester Träger zur Aktivierung von Metallocenen als Katalysatoren bei der Olefinpolymerisation, **dadurch gekennzeichnet, dass** er aus einem Gemenge von Teilchen eines Trägers einer festen, katalytischen Verbindung besteht, gebildet aus mindestens einem porösen anorganischen Oxid; die genannten Teilchen sind so oberflächenmodifiziert, dass sie aluminium- oder magnesiumhaltige Lewis-saure Reste der Formeln:

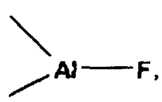
,
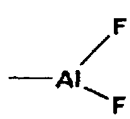

oder —Mg—F
aufweisen, wobei die

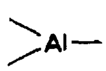

Gruppen aus einem Funktionalisierungsmittel stammen,
das mit OH-Gruppen reagiert hat, die aus den Teilchen des Basisträgermaterials stammen, und wobei der Funktionalisierungsreaktion eine Fluorierungsreaktion folgt.

**2.** Träger nach Anspruch 1, **dadurch gekennzeichnet, dass** die anorganischen Oxide ausgewählt sind aus Siliziumdioxid, Aluminiumoxid und deren Mischungen.

3. Träger nach einem der Ansprüche 1 und 2, **dadurch gekennzeichnet, dass** die Teilchen Poren mit einem Durchmesser von 7,5 bis 30 nm aufweisen.

4. Träger nach einem der Ansprüche 1 bis 3, **dadurch gekennzeichnet, dass** die Teilchen eine Porosität von 1 bis 4 $cm^3/g$ aufweisen.

5. Träger nach einem der Ansprüche 1 bis 4, **dadurch gekennzeichnet, dass** die Teilchen eine spezifische Oberfläche von 100 bis 600 $m^2/g$ aufweisen.

6. Träger nach einem der Ansprüche 1 bis 5, **dadurch gekennzeichnet, dass** die Teilchen einen mittleren Durchmesser von 1 bis 100 µm aufweisen.

7. Träger nach einem der Ansprüche 1 bis 6, **dadurch gekennzeichnet, dass** die Teilchen auf ihrer Oberfläche 0,25 bis 10, insbesondere 0,5 bis 4, der zuvor genannten aluminium und/oder magnesiumhaltigen Lewis-sauren Reste pro $nm^2$ aufweisen, die mindestens teilweise fluoriert sind.

8. Träger nach einem der Ansprüche 1 bis 7, **dadurch gekennzeichnet, dass** die aluminium- und/oder magneslumhaltigen Lewis-sauren Reste, die mindestens teilweise fluoriert sind, aus der Reaktion der OH-Gruppen der Teilchen des Basisträgermaterials mit mindestens einem Funktionalisierungsmittel stammen, letzteres ausgewählt aus:

- Verbindungen der Formel (I):

$$Al(R^1)_3 \qquad (I)$$

  in denen die Reste $R^1$, gleich oder verschieden, jeweils einen $C_1$- bis $C_{20}$-Alkylrest darstellen;
- Verbindungen der Formel (II):

$$Mg(R^2)_2 \qquad (II)$$

  in denen die Reste $R^2$, gleich oder verschieden, jeweils einen $C_1$- bis $C_{20}$-Alkylrest darstellen;
- Verbindungen der Formel (III):

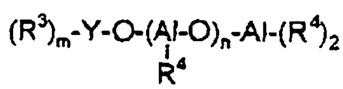

(III)

  in der:

  - die Reste $R^3$, gleich oder verschieden, jeweils einen $C_1$- bis $C_{12}$-Alkylrest oder einen $C_1$- bis $C_{12}$- Alkoxyrest darstellen;
  - die Reste $R^4$, gleich oder verschieden, jeweils einen $C_1$- bis $C_{12}$-Alkylrest oder einen $C_1$- bis $C_{12}$- Alkoxyrest darstellen;
  - Y Al oder Si darstellt und m einen Wert von 2 hat, wenn Y Aluminium ist und einen Wert von 3 hat, wenn Y = Si ist; und
  - n entweder 0 oder eine ganze Zahl zwischen 1 und 40 darstellt; vorzugsweise hat n den Wert 0 oder ist eine ganze Zahl zwischen 1 und 20;

- Verbindungen der Formel (IV):

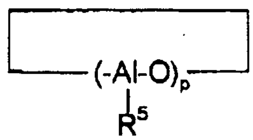 (IV)

in der:

- die Reste $R^5$ jeweils einen $C_1$- bis $C_8$- Alkylrest darstellen; und
- p eine ganze Zahl zwischen 3 und 20 ist,

und diese Funktionalisierungsreaktion von einer Fluorierungsreaktion gefolgt wird.

**9.** Träger nach Anspruch 8, **dadurch gekennzeichnet, dass** die Verbindung (I) Triethylaluminium ist.

**10.** Träger nach Anspruch 8, **dadurch gekennzeichnet, dass** die Verbindung (II) n-Butylsek.-butylmagnesium ist.

**11.** Träger nach Anspruch 8, **dadurch gekennzeichnet, dass** die Verbindung (III) Dibutoxyaluminoxytriethoxysilan $(C_2H_5O)_3Si\text{-}O\text{-}Al\text{-}(OC_4H_9)_2$, Tetraisobutyldialuminoxan $(i\text{-}Bu)_2\text{-}Al\text{-}O\text{-}Al\text{-}(i\text{-}Bu)_2$ oder ein lineares oligomeres Alkylaluminoxan ist, insbesondere solche, in denen $R^3$ und $R^4$ Methylgruppen sind.

**12.** Träger nach einem der Ansprüche 1 bis 11, präimprägniert mit einem Metallocenkatalysator, wobei dieser Metallocenkatalysator gegebenenfalls einer Präalkylierungsbehandlung unterzogen wurde, die vor oder nach der Präimprägnierung dieses Trägers durchgeführt wird.

**13.** Verfahren zur Herstellung eines festen Trägers zur Aktivierung von Metallocenen als Katalysatoren bei der Olefinpolymerisation, **dadurch gekennzeichnet, dass** ein Gemenge von Teilchen eines Trägers, die aus mindestens einem porösen anorganischen Oxid stammen und auf der Oberfläche OH-Gruppen aufweisen, unter Verwendung eines Funktionalisierungsmittels, welches zur Pfropfung von aluminium- und/oder magnesiumhaltigen Lewis-sauren Gruppen auf diese Teichen geeignet ist, einer Funktionalisierung unterzogen wird; und dass anschließend diese so gepfropften Teilchen des Trägers einer Fluorierungsbehandlung unterzogen werden.

**14.** Verfahren nach Anspruch 13, **dadurch gekennzeichnet, dass** die anorganischen Oxide ausgewählt sind aus Siliziumdioxid, Aluminiumoxid und deren Mischungen.

**15.** Verfahren nach einem der Ansprüche 13 und 14, **dadurch gekennzeichnet, dass** man Teilchen verwendet, die Poren mit einem Durchmesser von 7,5 bis 30 nm aufweisen.

**16.** Verfahren nach einem der Ansprüche 13 bis 15, **dadurch gekennzeichnet, dass** man Teilchen verwendet, die eine Porosität von 1 bis 4 $cm^3/g$ aufweisen.

**17.** Verfahren nach einem der Ansprüche 13 bis 16, **dadurch gekennzeichnet, dass** man Teilchen verwendet, die eine spezifische Oberfläche von 100 bis 600 $m^2/g$ aufweisen.

**18.** Verfahren nach einem der Ansprüche 13 bis 17, **dadurch gekennzeichnet, dass** man Teilchen verwendet, die einen mittleren Durchmesser von 1 bis 100 $\mu m$ aufweisen.

**19.** Verfahren nach einem der Ansprüche 14 bis 18, **dadurch gekennzeichnet, dass** man Teilchen verwendet, die auf ihrer Oberfläche 0,25 bis 10, insbesondere 0,5 bis 4, dieser OH-Gruppen pro $nm^2$ aufweisen.

**20.** Verfahren nach einem der Ansprüche 13 bis 19, **dadurch gekennzeichnet, dass** man ein Funktionalisierungsmittel verwendet, wie es zuvor in einem der Ansprüche 8 bis 11 definiert wurde.

**21.** Verfahren nach einem der Ansprüche 13 bis 20, **dadurch gekennzeichnet, dass** man die Funktionalisierung durchführt, in dem man eine Suspension der genannten Teilchen in einem Lösemittel mit dem genannten Funktionalisierungsmittel bei einer Temperatur von -150 bis +150 °C für eine Dauer zwischen 1 Minute und 12 Stunden behandelt und anschließend nach einem Waschvorgang die gepfropften Teilchen abtrennt.

**22.** Verfahren nach einem der Ansprüche 13 bis 21, **dadurch gekennzeichnet, dass** man 0,5 bis 20 mmol des Funktionalisierungsmittels pro g Teilchen verwendet.

**23.** Verfahren nach einem der Ansprüche 13 bis 22, **dadurch gekennzeichnet, dass** man nach der Funktionalisierung eine thermische Behandlung unter Inertgas durchführt, vorzugsweise in einem Festbett, das mit Inertgas fluidisiert ist, wobei diese Behandlung der Entfernung der auf der Oberfläche befindlichen Alkoxygruppen dient.

**24.** Verfahren nach einem der Ansprüche 13 bis 23, **dadurch gekennzeichnet, dass** man vor der Fluorierung eine Oxidationsbehandlung durchführt, die insbesondere aus einer thermischen Behandlung in einem durch Sauerstoff fluidisierten Festbett besteht.

**25.** Verfahren nach einem der Ansprüche 13 bis 24, **dadurch gekennzeichnet, dass** man eine Fluorierung durchführt, in dem man gegebenenfalls nach einer thermischen Behandlung unter Inertgas und/oder nach einer Oxidation, die funktionalisierten Trägerteilchen mit gasförmigem Fluorwasserstoff in einem Verhältnis von 1 bis 5 Gew.-%, bevorzugt 3 bis 5 Gew.-%, Fluor - bezogen auf die Trägerteilchen - in Kontakt bringt, dieses Inkontaktbringen erfolgt für eine Dauer zwischen 1 Minute und 24 Stunden bei einer Temperatur von 20 bis 800 °C.

**26.** Verfahren nach einem der Ansprüche 13 bis 24, **dadurch gekennzeichnet, dass** man die Fluorierung mittels $(NH_4)_2SiF_6$ durchführt, in dem man die funktionalisierten Trägerteilchen, gegebenenfalls nach einer thermischen Behandlung unter Inertgas und/oder nach einer Oxidation, mit pulverförmigem $(NH_4)_2SiF_6$ in einem Verhältnis von 1 bis 5 Gew.-%, insbesondere von 3 bis 5 Gew.-%, Fluor - bezogen auf die Trägerteilchen - mischt; anschließend die gefällte Mischung mit einem Inertgas leicht fluidisiert und eine thermische Behandlung bei einer Temperatur von ca. 300 bis 500 °C für eine Dauer von 1 bis 10 Stunden durchführt.

**27.** Katalytisches System für die Polymerisation von Olefinen, enthaltend:

(a) einen Metallocenkatalysator, der gegebenenfalls einer Präalkylierung unterzogen ist;
(b) einen Co-Katalysator, und
(c) einen festen Träger zur Aktivierung von Metallocenen nach einem der Ansprüche 1 bis 11 oder hergestellt nach einem Verfahren der Ansprüche 13 bis 26;

der Co-Katalysator (b) kann entfallen, wenn der Metallocenkatalysator (a) zuvor alkyliert wurde; der Träger (c) kann mit dem Metallocenkatalysator (a) imprägniert sein, wobei dieser gegebenenfalls einer Präalkylierungsbehandlung unterzogen wird, die entweder vor oder nach der Präimprägnierung dieses Trägers durchgeführt wird.

**28.** Katalytisches System nach Anspruch 27, **dadurch gekennzeichnet, dass** der Metailocenkatalysator (a) ausgewählt ist aus den Verbindung der Formel (V):

$$ML_x \qquad (V)$$

in der

- M ein Übergangsmetall aus der Gruppe 4b des Periodensystems der Elemente darstellt;
- L einen Koordinationsliganden für ein Übergangsmetall darstellt, mindestens aber einen Liganden L aus der Gruppe der Cycloalkadienylreste;
- x der Valenz des Übergangsmetalls und der Liganden L entspricht, die Liganden L sind gleich oder verschieden und ihre Anzahl entspricht der Valenz des Übergangsmetalls M;
- wenn die Verbindung (V) mindestens 2 Cycloalkadienylreste aufweist, sind mindestens zwei dieser Gruppen untereinander durch eine zweiwertige Gruppe verbunden;
- wenn eine der Cycloalkadienylgruppen subsituiert ist, können die Substituenten ausgewählt sein aus der Gruppe der $C_1$ bis $C_{20}$- Alkylreste, der $C_2$- bis $C_{20}$- Alkenylreste, der Aryl- und Aralkylreste; die Substituenten können ausgewählt sein aus zwei benachbarten Substituenten des gleichen Cyclopentadienylrings, die miteinander unter Bildung eines aromatischen oder nicht-aromatischen Rings, der mit den genannten Cycloalkadienylgruppen kondensiert ist, verbunden sein können und in dem Fall, wo dieser letztgenannte Ring ein Cyclopentadienylring ist, kann der resultierende kondensierte Cyclus ein Indenylring, Trahydroindenylring, Fluorenylring oder Octahydrofluorenylring sein.

- mindestens ein Ligand L kann ausgewählt sein aus der Gruppe der Formeln -O-, -S-, $-NR^6-$ oder $-PR^6$ (wobei $R^6$ ein Wasserstoffatom oder eine Gruppe darstellt, ausgesucht aus der Gruppe der Silyl-, Alkyl- oder Arylreste, wobei die beiden letzteren eventuell halogeniert sind), wobei eine der freien Valenzen an das Übergangsmetall M und die andere freie Valenz an eine zweiwertige Gruppe gebunden ist, die wiederum an einen Liganden L an einem Cycloalkadienylrest gebunden ist; oder ausgewählt aus den Gruppen der Formeln -O-, $-R^7-$, $-SR^7-$, $-NR^7_2$ oder $-PR^7_2$ ($R^7$ stellt die gleichen Reste wie vorher $R^8$ dar), in denen die freie Valenz an einen zweiwertigen Rest gebunden ist, der wiederum an einen Liganden L an einem Cycloalkadienylrest gebunden ist;
- die Liganden L, die von den vorgenannten verschieden sind, können ausgewählt sein aus der Gruppe der Kohlenwasserstoffe mit 1 bis 20 Kohlenstoffatomen, der Alkoxyverbindungen und der Halogene.

**29.** Katalytisches System nach einem der Ansprüche 27 und 28, **dadurch gekennzeichnet, dass** der Co-Katalysator (b) ausgewählt ist aus:

(b1)Alkylaluminiumverbindungen der Formel (Ia)

$$Al(R^8)_3 \qquad (Ia)$$

in der die Reste $R^8$, gleich oder verschieden, eine subsituierte oder nicht subsituierte Alkylgruppe mit 1 bis 12 Kohlenstoffatomen, eine Alkoxygruppe, eine Arylgruppe, ein Halogen-, Wasserstoff- oder Sauerstoffatom darstellen, wobei mindestens einer der $R^8$-Reste ein Alkylrest ist;

(b2) Aluminiumsesquihalogeniden;

(b3)Verbindungen der Formel (IIIa) bestehend aus den Verbindungen der Formel (III) wie vorstehend in Anspruch 8 genannt, wobei Y = Aluminium ist;

(b4) Verbindungen der Formel (IV) wie in Anspruch 8 definiert.

**30.** Katalytisches System nach Anspruch 29, **dadurch gekennzeichnet, dass** der Co-Katalysator (b) ausgewählt ist aus Methylaluminoxan, Triisobutylaluminium und Triethylaluminium.

**31.** Katalytisches System nach einem der Ansprüche 27 bis 30, **dadurch gekennzeichnet, dass** das molare Verhältnis von Aluminium des Co-Katalysators (b1) oder (b2) zu dem Übergangsmetall des Metallocens zwischen 1 und 10.000, insbesondere zwischen 1 und 2.000, liegt und das molare Verhältnis von Aluminium des Co-Katalysators (b3) oder (b4) zu dem Übergangsmetall des Metaliocens (a) zwischen 1 und 10.000, insbesondere zwischen 10 und 200, liegt.

**32.** Katalytisches System nach einem der Ansprüche 27 bis 31, **dadurch gekennzeichnet, dass** der feste Aktivator in einer Menge zwischen 0,01 und 2000 mg, insbesondere in einer Menge zwischen 0,01 und 200 mg, eingesetzt wird pro µmol Metallocenkatalysator.

**33.** Verfahren zur Homopolymerisation oder Copolymerisation von Olefinen, in Suspension oder in der Gasphase, in Gegenwart eines katalytischen Systems der Ansprüche 27 bis 32.

**34.** Verfahren nach Anspruch 33, **dadurch gekennzeichnet, dass** man $C_2$- bis $C_{20}$- Olefine, insbesondere α-Olefine wie Ethylen, Propylen, 1-Buten, 4-Methyl-1-penten, 1-Octen, 1-Hexen, 3-Methylpenten, 3-Methyl-1-buten, 1-Decen, und 1-Tetradecen einsetzt.

**35.** Verfahren nach Anspruch 34, **dadurch gekennzeichnet, dass** das zu (co-)polymerisierende Olefin Ethylen ist.

**36.** , Verfahren nach einem der Ansprüche 33 bis 35, durchgeführt in Suspension, **dadurch gekennzeichnet, dass** man in einen Reaktor eine Suspension eines katalytischen Systems in einem inerten Milieu, wie zum Beispiel in einem aliphatischen Kohlenwasserstoff, in einer Konzentration von Metallocen (a) zwischen 0,5 µmol/l und 10 µmol/l zugibt, wobei die Konzentration des Co-Katalysators (b) von 0,01 bis 5 mmol/l und die Menge an festem Aktivator zwischen 0,5 und 1000 mg/l liegt; anschließend gibt man das oder die Olefine unter einem Druck zwischen 1 bis 250 bar hinzu, wobei die (Co-)Polymerisation bei einer Temperatur zwischen -20 °C und 250 °C für eine

Dauer von 5 Minuten bis 10 Stunden durchgeführt wird.

**37.** Verfahren nach Anspruch 36, **dadurch gekennzeichnet, dass** man das oder die Olefine unter einem Druck zwischen 0,5 und 60 bar hinzugibt und dass man bei einer Temperatur zwischen 10 °C und einer Temperatur leicht unterhalb der Schmelztemperatur des Polymers arbeitet.

**38.** Verfahren nach einem der Ansprüche 33 bis 35, durchgeführt in gasförmiger Phase, **dadurch gekennzeichnet, dass** man das oder die Olefine unter einem Druck zwischen 1 und 60 bar bei einer Temperatur zwischen 10 und 110 °C in einen Reaktor einspritzt, der ein gerührtes und/oder fluidisiertes Bett aus dem katalytischem System enthält.

**39.** Verfahren nach einem der Ansprüche 33 bis 38, **dadurch gekennzeichnet, dass** man in Gegenwart eines Kettenübertragungsmittels arbeitet, wie zum Beispiel Wasserstoff.

**40.** Verfahren nach einem der Ansprüche 33 bis 39, **dadurch gekennzeichnet, dass** man zunächst eine Präpolymerisation, in Suspension oder vorzugsweise in Gasphase, mit einem der zuvor beschriebenen katalytischen Systeme nach einem der Ansprüche 27 bis 32 durchführt und dann die so erhaltenen Präpolymerteilchen in das Co-Polymerisationsverfahren einführt, genauer gesagt in Suspension oder in der Gasphase.

## Claims

**1.** Activator solid support for metallocenes as catalysts in the polymerization of olefins, **characterized in that** it consists of a group of support particles for a solid catalytic component, which are formed from at least one porous mineral oxide, the said particles having been modified in order to carry, on the surface, aluminium and/or magnesium Lewis-acid sites of formula:

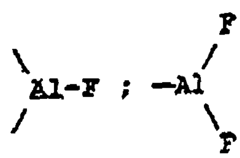

or -Mg-F, the

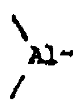

groups coming from a functionalization agent having reacted with -OH radicals carried by the base particles of the support, the functionalization reaction having been followed by a fluorination reaction.

**2.** Support according to Claim 1, **characterized in that** the mineral oxides are chosen from silica, alumina and mixtures thereof.

**3.** Support according to either of Claims 1 and 2, **characterized in that** the particles include pores having a diameter ranging from 7.5 to 30 nm.

**4.** Support according to one of Claims 1 to 3, **characterized in that** the particles have a porosity ranging from 1 to 4 $cm^3/g$.

**5.** Support according to one of claims 1 to 4, **characterized in that** the particles have a specific surface area ranging

from 100 to 600 $m^2/g$.

**6.** Support according to one of Claims 1 to 5, **characterized in that** they have an average diameter ranging from 1 to 100 μm.

**7.** Support according to one of Claims 1 to 6, **characterized in that** the particles have, on their surface, from 0.25 to 10, especially from 0.5 to 4, of the said at least partially fluorinated aluminium and/or magnesium Lewis-acid sites per $nm^2$.

**8.** Support according to one of Claims 1 to 7, **characterized in that** the said at least partially fluorinated aluminium and/or magnesium Lewis-acid sites are formed by the reaction of -OH radicals carried by the support base particles with at least one functionalization agent chosen from:

- compounds of formula (I):

$$Al(R^1)_3 \qquad (I)$$

  in which the $R^1$ groups, which are identical or different, each represent a $C_1$-$C_{20}$ alkyl group;
- compounds of formula (II):

$$Mg(R^3)_2 \qquad (II)$$

  in which the $R^2$ groups, which are identical or different, each represent a $C_1$-$C_{20}$ alkyl group; and
- compounds of formula (III):

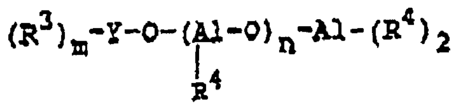

(III) .

  in which:

  - the $R^3$ groups, which are identical or different, each represent a $C_1$-$C_{12}$ alkyl group or a $C_1$-$C_{12}$ alkoxy group;
  - the $R^4$ groups, which are identical or different, each represent a $C_1$-$C_{12}$ alkyl group or a $C_1$-$C_{12}$ alkoxy group;
  - Y represents Al or Si, m having a value of 2 if Y = Al and 3 if Y = Si; and
  - n has a value of 0 or is an integer from 1 to 40, n preferably having a value of 0 or being an integer from 1 to 20;

- compounds of formula (IV):

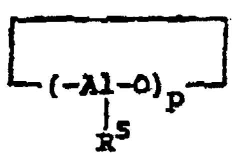

(IV)

  in which:

  - the $R^5$ groups each represent a $C_1$-$C_8$ alkyl group; and
  - p is an integer from 3 to 20,

the said functionalization reaction having been followed by a fluorination reaction.

9. Support according to Claim 8, **characterized in that** compound (I) is triethylaluminium.

10. Support according to Claim 8, **characterized in that** compound (II) is (n-butyl) (sec-butyl)magnesium.

11. Support according to Claim 8, **characterized in that** compound (III) is dibutoxyaluminoxytriethoxysilane $(C_2H_5O)_3Si\text{-}O\text{-}Al\text{-}(OC_4H_9)_2$, tetraisobutyldialuminoxane $(iBu)_2Al\text{-}O\text{-}Al(iBu)_2$ and linear alkylaluminoxane oligomers, in particular those in which $R^3$ and $R^4$ are methyl groups.

12. Support as defined in one of Claims 1 to 11, pre-impregnated with a metallocene catalyst, the said metallocene catalyst having been subjected, if required, to a prealkylation treatment carried out before or after the said support has been pre-impregnated.

13. Process for preparing an activator solid support for metallocenes as catalysts in the polymerization of olefins, **characterized in that** a group of support particles for a solid catalytic component, which are formed from at least one porous mineral oxide and carry, on the surface, -OH radicals, undergoes functionalization by using a functionalization agent capable of grafting aluminium and/or magnesium Lewis-acid sites on the said particles; the said support particles thus grafted are then subjected to a fluorination treatment.

14. Process according to Claim 13, **characterized in that** the mineral oxides are chosen from silica, alumina and mixtures thereof.

15. Process according to either of Claims 13 and 14, **characterized in that** particles which include pores having a diameter ranging from 7.5 to 30 nm are used.

16. Process according to one of Claims 13 to 15, **characterized in that** particles having a porosity ranging from 1 to 4 $cm^3/g$ are used.

17. Process according to one of Claims 13 to 16, **characterized in that** particles having a specific surface area ranging from 100 to 600 $m^2/g$ are used.

18. Process according to one of Claims 13 to 17, **characterized in that** particles having an average diameter ranging from 1 to 100 μm are used,

19. Process according to one of Claims 14 to 18, **characterized in that** particles having on their surface, ranging from 0.25 to 10, especially ranging from 0.5 to 4, of the said -OH radicals per $nm^2$ are used.

20. Process according to one of Claims 13 to 19, **characterized in that** a functionalization agent as defined in one of Claims 8 to 11 is used.

21. Process according to one of Claims 13 to 20, **characterized in that** the functionalization is carried out by treating a suspension of the said particles in a solvent medium with the said functionalization agent at a temperature ranging from -150 to +150°C for a period of time ranging from 1 minute to 12 hours, and then by recovering the grafted particles after washing.

22. Process according to one of Claims 13 to 21, **characterized in that** from 0.5 to 20 mmol of functionalization agent per g of particles are used.

23. Process according to one of Claims 13 to 22, **characterized in that** after the functionalization, a heat treatment in an inert gas is carried out, preferably in a bed fluidized by the said inert gas, the said treatment being intended to remove the alkoxy groups present on the surface.

24. Process according to one of Claims 13 to 23, **characterized in that**, prior to the fluorination treatment, an oxidation treatment is carried out which consists, in particular, of a heat treatment in a bed fluidized by oxygen.

25. Process according to one of Claims 13 to 24, **characterized in that** the fluorination treatment is carried out by bringing the functionalized support particles into contact with gaseous hydrofluoric acid, if necessary after heat

treatment in an inert gas and/or after oxidation, especially in an amount of from 1 to 5% by weight, in particular 3 to 5% by weight, of fluorine with respect to the said support particles, this contacting step being carried out for a period of time ranging from 1 minute to 24 hours, at a temperature ranging from 20 to 800°C.

**26.** Process according to one of Claims 13 to 24, **characterized in that** the fluorination treatment is carried out by $(NH_4)_2SiF_6$, by mixing the functionalized support particles, if necessary after heat treatment in an inert gas and/or after oxidation, with powdered $(NH_4)_2SiF_6$, especially in an amount ranging from 1 to 5% by weight, in particular 3 to 5% by weight, of fluorine with respect to the said support particles, and then by gently fluidizing the aforementioned mixture with an inert gas and by carrying out a heat treatment at a temperature of approximately 300 to 500°C for approximately 1 to 10 hours.

**27.** Catalytic system for the polymerization of olefins, comprising:

(a) a metallocene catalyst, which has, if required, been subjected to a prealkylation treatment;
(b) a cocatalyst; and
(c) an activator solid support for metallocene, as defined in one of claims 1 to 11 or prepared by the process as defined in one of Claims 13 to 26,

it being possible for the cocatalyst (b) to be absent if the metallocene catalyst (a) has been prealkylated, it being possible for the support (c) to have been impregnated with the metallocene catalyst (a), which catalyst has, if required, been subjected to a prealkylation treatment carried out either before or after the said support has been pre-impregnated.

**28.** Catalytic system according to Claim 27, **characterized in that** the metallocene catalyst (a) is chosen from compounds of formula (V) :

$$ML_x \qquad (V)$$

in which:

- M represents a transition metal belonging to Group 4b of the Periodic Table of Elements;
- L represents a ligand coordinated to the transition metal, at least one ligand L being a group having a cycloalkadienyl-type backbone; and
- x is equal to the valency of the transition metal, the ligands L, the number of which is equal to the valency of the transition metal M, being identical or different;

• when compound (V) contains at least two groups having a cycloalkadienyl-type backbone, it being possible for at least two of these groups to be linked together by a divalent radical;
• when a group having a cycloalkadienyl backbone is substituted, it being possible for the, substituents to be chosen from $C_1$-$C_{20}$ alkyl, $C_2$-$C_{20}$ alkenyl, aryl and aralkyl groups, it being possible for two substituents lying in adjacent positions on the same cyclopentadienyl ring to be linked together, forming an aromatic or nonaromatic ring condensed on the said cycloalkadienyl ring, and, if the latter is a cyclopentadienyl ring, it being possible for the resulting condensed ring to be an indenyl, tetrahydroindenyl, fluorenyl or octahydrofluorenyl ring;
• it being possible for at least one ligand L to be chosen from groups of formula -O-; -S-; $-NR^6-$; or $-PR^6$ (where $R^6$ represents hydrogen or a group chosen from silyl, alkyl or aryl groups, the latter two optionally being halogenated), one of the free valencies of which is linked to the transition metal M atom and the other free valency of which is linked to a divalent radical which is itself linked to a ligand L having a cycloalkadienyl backbone; and groups of formula $-OR^7$; $-SR^7$; $-NR^7_2$; or $-PR^7_2$ [$R^7$ having the same meaning as $R^6$ above), the free valency of which is linked to a divalent radical which is itself linked to a ligand L having a cycloalkadienyl backbone;
• it being possible for ligands L differing from those defined above to be chosen from hydrocarbon groups containing from 1 to 20 carbon atoms, alkoxy groups and halogens.

**29.** Catalytic system according to either of Claims 27 and 28, **characterized in that** the cocatalyst (b) is chosen from:

(b1) alkylaluminiums of formula (Ia):

$$Al(R^8)_3 \quad (Ia)$$

in which the $R^8$ groups, which are identical or different, represent a substituted or unsubstituted alkyl, containing from 1 to 12 carbon atoms; an alkoxy; an aryl; a halogen; hydrogen or oxygen; at least one $R^8$ group representing an alkyl;
(b2) aluminium sesquihalides;
(b3) compounds of formula (IIIa) consisting of compounds of formula (III) as defined in Claim 8, in which Y = Al; and
(b4) compounds of formula (IV) as defined in Claim 8.

**30.** Catalytic system according to Claim 29, **characterized in that** the cocatalyst (b) is chosen from methylaluminoxane, triisobutylaluminium and triethylaluminium.

**31.** Catalytic system according to one of claim 27 to 30, **characterized in that** the Al molar ratio of the cocatalyst (b1) or (b2) to the transition metal of the netallocene is from 1 to 10,000, in particular from 1 to 2000; and the Al molar ratio of the cocatalyst (b3) or (b4) to the transition metal of the metallocene (a) is from 1 to 10,000, in particular from 10 to 200.

**32.** Catalytic system according to one of Claims 27 to 31, **characterized in that** the activator solid is used in an amount ranging from 0.01 to 2000 mg, in particular from 0.01 to 200 mg, per µmole of metallocene catalyst.

**33.** Process for homopolymerizing or copolymerizing olefins, in suspension or in the gas phase, in the presence of a catalytic system as defined in one of Claims 27 to 32.

**34.** Process according to Claim 33, **characterized in that** $C_2$-$C_{20}$ olefins, in particular α-olefins such as ethylene, propylene, 1-butene, 4-methyl-1-pentene, 1-octene, 1-hexene, 3-methyl-1-pentene, 3-methyl-1-butene, 1-decene and 1-tetradecene, are used.

**35.** Process according to Claim 34, **characterized in that** the olefin to be (co)polymerized is ethylene.

**36.** Process according to one of Claims 33 to 35, carried out in suspension, **characterized in that** a suspension in an inert medium, such as an aliphatic hydrocarbon, of the catalytic system is introduced into a reactor, the concentration of the metallocene (a) being from 0.5 µmol/l to 10 µmol/l, that of the cocatalyst (b) being from 0.01 to 5 mmol/l, the amount of activator solid support being from 0.5 to 1000 mg/l, and then the olefin or olefins are introduced at a pressure ranging from 1 to 250 bar, the (co)polymerization being carried out at a temperature ranging from -20°C to 250°C for a period of time ranging from 5 minutes to 10 hours.

**37.** Process according to Claim 36, **characterized in that** the olefin or olefins are introduced at a pressure ranging from 0.5 to 60 bar and the operation is carried out at a temperature ranging from 10°C to a temperature slightly below the melting point of the polymer.

**38.** Process according to one of Claims 33 to 35, carried out in the gas phase, **characterized in that** the olefin or olefins are injected at a pressure of 1 - 60 bar, at a temperature ranging from 10 to 110°C, into a reactor having a stirred bed and/or a fluidized bed of the catalytic system.

**39.** Process according to one of Claims 33 to 38, **characterized in that** the operation is carried out in the presence of a chain-transfer agent, such as hydrogen.

**40.** Process according to one of Claims 33 to 39, **characterized in that** a suspension or, preferably, gas-phase prepolymerization step is firstly carried out on the catalytic system as defined in one of Claims 27 to 32 and then the prepolymer particles thus obtained are introduced into the suspension or gas-phase (co) polymerization process proper.